**Europäisches Patentamt**

**European Patent Office**

**Office européen des brevets**

(11) Numéro de publication: **0 165 874**
**B1**

## FASCICULE DE BREVET EUROPÉEN

(45) Date de publication du fascicule du brevet:
31.08.88

(51) Int. Cl.⁴: **F 16 D  13/68,** F 16 F  15/12

(21) Numéro de dépôt: **85401226.7**

(22) Date de dépôt: **19.06.85**

(54) Dispositif amortisseur de torsion, en particulier friction d'embrayage, notamment pour véhicule automobile.

(30) Priorité: **22.06.84  FR 8409853**
**31.05.85  FR 8508253**

(43) Date de publication de la demande:
**27.12.85 Bulletin 85/52**

(45) Mention de la délivrance du brevet:
**31.08.88 Bulletin 88/35**

(84) Etats contractants désignés:
**DE GB**

(56) Documents cité:
**EP-A-0 015 204**
**EP-A-0 079 727**
**EP-A-0 104 823**
**FR-A-2 456 264**
**FR-A-2 495 255**
**GB-A-2 040 398**
**GB-A-2 103 760**

(73) Titulaire: **VALEO, 64 Avenue de la Grande Armée,**
**F-75017 Paris (FR)**

(72) Inventeur: **Billet, René, Allée des Cerfs Résidence**
**Beaularris, F-60620 Lamorlaye (FR)**
Inventeur: **Rumignani, Paolo, 13, Villa Eugène**
**Leblanc, F-75019 Paris (FR)**
Inventeur: **Chasseguet, Gustave, 2, avenue Tourne-**
**Vent, F-95150 Taverny (FR)**

(74) Mandataire: **CABINET BONNET- THIRION, 95**
**Boulevard Beaumarchais, F-75003 Paris (FR)**

LIBER, STOCKHOLM 1988

## Description

La présente invention concerne d'une manière générale les dispositifs amortisseurs de torsion comportant au moins deux parties coaxiales montées rotatives l'une par rapport à l'autre dans les limites d'un débattement angulaire déterminé et à l'encontre de moyens élastiques, communément dits moyens élastiques à action circonférentielle, aptes à agir circonférentiellement entre elles pour une plage au moins d'un tel débattement angulaire.

Ainsi qu'on le sait, un tel dispositif amortisseur de torsion entre usuellement dans la constitution d'une friction d'embrayage, notamment pour véhicule automobile, l'une de ses parties rotatives portant alors un disque de friction, destiné à être solidarisé en rotation avec un premier arbre, en pratique un arbre menant, l'arbre de sortie du moteur dans le cas d'un tel véhicule automobile, tandis qu'une autre desdites parties rotatives est portée par un moyeu destiné à être solidarisé en rotation avec un deuxième arbre, en pratique un arbre mené, l'arbre d'entrée d'une boîte de vitesses dans le cas concerné d'un tel véhicule automobile.

Un tel dispositif permet en effet d'assurer une transmission régulée du couple de rotation appliqué à l'une de ses parties rotatives lorsque l'autre est elle-même l'objet d'un couple de rotation, c'est-à-dire de filtrer les vibrations susceptibles de prendre naissance tout au long de la chaîne cinématique sur laquelle il est inséré, qui va du moteur aux arbres de roue commandés dans le cas d'un véhicule automobile.

La présente invention vise plus particulièrement le cas où au moins trois parties coaxiales sont mises en oeuvre pour la constitution d'un tel dispositif amortisseur de torsion, lesdites parties coaxiales étant comme précédemment deux à deux montées rotatives l'une par rapport à l'autre dans les limites d'un débattement angulaire déterminé et à l'encontre de moyens élastiques à action circonférentielle aptes à agir entre elles pour une plage au moins d'un tel débattement angulaire.

Il s'agit, en pratique, d'un moyeu, d'au moins un voile, communément dit voile de moyeu, qui forme transversalement une pièce annulaire autour du moyeu, avec, entre lui et ledit moyeu, des moyens d'engrènement à jeu, et d'au moins une rondelle, communément dite rondelle de guidage, qui, comme ledit voile de moyeu, et parallèlement à celui-ci, forme transversalement une pièce annulaire autour du moyeu, mais sans relation avec ce dernier.

Entre le moyeu et le voile de moyeu il est formé un premier étage d'amortissement, et il en est formé un second entre le voile de moyeu et la ou les rondelles de guidage.

S'agissant d'une friction d'embrayage, ce sont ces dernières qui portent le plus souvent le disque de friction.

Ainsi qu'on le sait, il est avantageux, au moins pour certaines applications, et notamment pour celles relatives aux frictions d'embrayage pour véhicules automobiles, que les moyens élastiques à action circonférentielle mis en oeuvre entre le voile de moyeu et le moyeu soient des moyens élastiques de faible raideur.

En effet, de manière connue en soi pour les faibles valeurs de couple, cette disposition, appliquée aux frictions d'embrayage pour véhicules automobiles, permet notamment, lorsque le véhicule concerné est à l'arrêt, d'éliminer avantageusement les bruits de boîte de vitesses au point mort, notamment à chaud.

Mais usuellement, cette disposition a malheureusement une contre-partie, qui est d'être elle-même à l'origine d'un autre type de bruit, communément dit bruit de "klunk", lorsque, appliquée à une friction d'embrayage pour véhicule automobile, le conducteur d'un tel véhicule relâche, par exemple, plus ou moins brusquement, l'action d'enfoncement qu'il exerçait préalablement sur l'accélérateur de ce véhicule, le fonctionnement de l'ensemble passant alors du type dit "en tirage", suivant lequel le couple moteur l'emporte sur le couple résistant, au fonctionnement du type dit "en rétro", correspondant à un régime inverse du précédent.

En effet, les moyens élastiqués à action circonférentielle interposés entre le voile de moyeu et le moyeu étant très rapidement saturés, puisque de faible raideur, il en résulte, à chaque fois, un basculement quasi instantané, et donc bruyant, de ce voile de moyeu par rapport au moyeu, ce basculement correspondant à un changement d'appui, d'un sens circonférentiel à l'autre, entre les moyens d'engrènement à jeu intervenant entre ledit voile de moyeu et ledit moyeu, dû à une détente desdits moyens élastiques à action circonférentielle, préalablement saturés dans un premier sens circonférentiel, suivis d'une nouvelle saturation, dans le sens circonférentiel opposé, de ceux-ci.

Ce bruit de "klunk", qui se produit également lorsqu'une nouvelle action d'enfoncement est exercée sur l'accélérateur, est particulièrement sensible lorsque la conduite du véhicule concerné est du type "conduite en file", c'est-à-dire lorsque, comme cela peut se produire par exemple en circulation urbaine, la vitesse de ce véhicule est faible, et par exemple proche du régime normal de ralenti du moteur, et que, conjointement, le couple demandé à ce dernier est également faible, les moteurs équipant actuellement certains véhicules étant effectivement conçus de manière à pouvoir accepter de telles conditions de fonctionnement pour en minimiser la consommation.

En outre, il peut s'accompagner d'un basculement qui, transmis au moteur, et, par celui-ci, à la caisse du véhicule concerné, peut être à l'origine, pour cette caisse, notamment lorsque le moteur est établi transversalement par rapport à celle-ci, d'un mouvement d'oscillation, communément dit mouvement de gâchis, susceptible d'être désagréablement ressenti par le conducteur de ce véhicule.

Pour pallier ces inconvénients, diverses solutions ont été proposées, notamment dans la FR-A-2 449 828.

Suivant certaines de ces solutions, et s'agissant d'une manière générale d'un dispositif amortisseur de torsion comportant au moins deux parties coaxiales montées rotatives l'une par rapport a l'autre, il est mis en oeuvre un organe de verrouillage, qui, sensible à la force centrifuge, vient, au-delà d'une vitesse de rotation déterminée, ou vitesse critique, mettre systématiquement hors service la portion de faible raideur des moyens élastiques à action circonférentielle interposés entre lesdites parties rotatives.

Mais il s'avère que, le verrouillage ainsi assuré par un tel organe de verrouillage se faisant de manière positive, ledit organe de verrouillage voit au moins temporairement transiter par lui la totalité du couple à transmettre entre les parties rotatives concernées.

Or ce couple, qui n'est d'ailleurs pas nécessairement connu, notamment lors d'un fonctionnement en "rétro" de l'ensemble, peut être très éleve.

Il n'est pas rare, dans ces conditions, d'observer une rupture brutale d'un tel organe de verrouillage.

Suivant d'autres dispositions également décrites dans la FR-A-2 449 828 mentionnée ci-dessus, il est mis en oeuvre, non pas un organe de verrouillage, mais un organe d'interposition, qui, sensible lui aussi à la force centrifuge, est monté mobile entre une position d'attente, pour laquelle il est inactif, et, au-delà d'une vitesse de rotation déterminée, ou vitesse critique, une position de service, pour laquelle, intervenant entre les deux parties rotatives concernées, pour un sens de rotation relatif au moins de celles-ci, il sollicite, dans ledit sens de rotation, et pour les faibles valeurs de couple, des moyens élastiques à action circonférentielle autres que ceux agissant normalement entre ces parties rotatives aux valeurs de couple faibles concernées, en coopération avec des moyens de rappel le sollicitant en permanence en direction de sa dite position d'attente.

Autrement dit, grâce à cet organe d'interposition, les moyens élastiques à action circonférentielle de faible raideur agissant normalement entre ces deux parties rotatives aux faibles valeurs de couple sont empêchés d'agir seuls pour celles-ci lorsque ledit organe d'interposition est en position de service, et le couple auquel est alors soumis cet organe d'interposition est modéré, et bien déterminé, puisque correspondant à une partie seulement, des moyens élastiques à action circonférentielle de forte raideur également prévus par ailleurs entre lesdites parties rotatives.

Mais, en pratique, les dispositions décrites à ce sujet dans la FR-A-2 449 828 mentionnée ci-dessus se rapportent aux dispositifs amortisseurs de torsion ne comportant que deux parties rotatives.

Elles ne peuvent que difficilement être appliquées aux dispositifs amortisseurs de torsion comportant au moins trois de telles parties rotatives.

La présente invention a d'une manière générale pour objet une disposition plus particulièrement destinée, au contraire, à de tels dispositifs amortisseurs de torsion.

De manière plus précise, elle a pour objet un dispositif amortisseur de torsion, notamment pour véhicule automobile, du genre comportant au moins, d'une part, trois parties coaxiales deux à deux montées rotatives l'une par rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir, un moyeu, au moins un voile, communément dit voile de moyeu, qui forme tranversalement une pièce annulaire autour du moyeu, avec, entre lui et ledit moyeu, des moyens d'engrènement à jeu, et au moins une rondelle, communément dite rondelle de guidage, qui, comme ledit voile de moyeu, et parallèlement à celui-ci, forme transversalement une pièce annulaire autour du moyeu, mais sans relation avec celui-ci, et, d'autre part, un organe d'interposition, qui, sensible à la force centrifuge, est monté mobile entre une position d'attente, pour laquelle il est inactif, et, au-delà d'une vitesse de rotation déterminée, ou vitesse critique, une position de service, pour laquelle, intervenant entre deux desdites parties rotatives, pour un sens de rotation relatif au moins de celles-ci, il sollicite, dans ledit sens de rotation, une portion au moins des moyens élastiques à action circonférentielle autres que ceux agissant normalement entre elles, et des moyens de rappel aptes à solliciter en direction de sa dite position d'attente ledit organe d'interposition, ce dispositif amortisseur de torsion étant d'une manière générale caractérisé en ce que ledit organe d'interposition comporte au moins un flasque, qui, monté mobile radialement, en étant guidé pour ce faire par le voile de moyeu, comporte une denture par laquelle il est adapté à venir en prise, en position de service, avec une denture complémentaire prévue à cet effet sur le moyeu, et qui comporte également au moins une patte, ou patte d'appui, par laquelle il est apte à agir alors sur une portion au moins des moyens élastiques à action circonférentielle établis entre ledit voile de moyeu et une rondelle de guidage.

En pratique, deux flasques disposés diamétralement tête-bêche l'un par rapport à l'autre sont ainsi mis en oeuvre.

Quoi qu'il en soit, lorsque la vitesse de rotation de l'ensemble est suffisante, ce ou ces flasques viennent se claveter d'eux-mêmes sur le moyeu, en sorte que, lors d'un fonctionnement en "rétro" de l'ensemble, une portion au moins des moyens élastiques à action circonférentielle interposés entre la ou les rondelles de guidage et le voile de moyeu vient, sous la sollicitation de ces rondelles de guidage, porter circonférentiellement sur la patte d'appui d'un tel flasque.

La portion concernée des moyens élastiques à action circonférentielle se trouve dès lors intervenir aux faibles valeurs de couple, entre le voile de moyeu et le moyeu, indépendamment des moyens élastiques à action circonférentielle spécifiquement interposés entre ce voile de moyeu et le moyeu, puisque le ou lesdits flasques sont alors solidaires en rotation dudit moyeu.

Autrement dit, et comme recherché, les moyens élastiques à action circonférentielle de faible raideur spécifiquement interposés entre le voile de moyeu et le moyeu sont alors empêchés d'intervenir seuls.

En outre, si désiré, la capacité de débattement angulaire entre les parties coaxiales concernées peut être favorisée.

L'intérêt a cependant été démontré par la Demanderesse qu'il pouvait y avoir à élargir les flasques, en particulier la zone marginale séparant les bords du flasque de ceux les plus proches des évidements permettant le guidage de celui-ci.

En effet, la fiabilité à long terme du flasque s'en trouve nettement accrue, ce qui constitue un critère de qualité particulièrement important dans le domaine d'application principal de l'invention, à savoir les embrayages pour véhicules automobiles.

De plus, il est souhaitable de synchroniser le déplacement radial des deux flasques, ceci afin de permettre leur mise en position d'action à une vitesse de rotation déterminée des parties rotatives mises en oeuvre.

Avantageusement, selon un mode particulier de réalisation de l'invention, un organe d'interposition comporte trois parties coaxiales deux à deux montées rotatives, caractérisé en ce qu'entre lesdits flasques mobiles est interposé un flasque dit intermédiaire radialement fixe.

De préférence, chacun desdits flasques mobiles est relié au flasque intermédiaire par des moyens élastiques disposés de part et d'autre du moyeu, un moyen élastique reliant l'un des flasques mobiles au flasque intermédiaire et l'autre moyen élastique reliant l'autre flasque mobile au flasque intermédiaire.

De préférence, lesdits moyens élastiques sont des ressorts disposés de façon sensiblement parallèle aux flasques.

Selon un autre aspect de l'invention, les flasques mobiles sont en contact chacun avec l'une des faces du flasque intermédiaire sur lequel il glisse pour se déplacer radialement.

Selon un autre aspect de l'invention, des moyens de guidage sont prévus pour le guidage du déplacement radial des flasques mobiles, moyens empêchant tout débattement angulaire entre les flasques mobiles et le flasque intermédiaire.

Avantageusement, lesdits moyens de guidage sont constitués de crevés dits de guidage découpées sur trois côtés et repliées axialement en saillie en direction du flasque d'interposition dans les flasques mobiles, lesdits crevés de guidage pouvant coulisser dans des fenêtres ménagées dans les deux autres flasques de manière à permettre un déplacement, selon une seule direction parallèle au sens de déplacement radial des flasques, des crevés dans les fenêtres, et empêchent tout déplacement selon une autre direction. Lesdites fenêtres s'étendent radialement sur une longueur telle qu'elles permettent un déplacement des crevés de guidage suffisant pour qu'un déplacement radial relatif des flasques permette l'engagement total des dentures des flasques radialement mobiles avec la denture du moyeu.

Ainsi, les flasques peuvent se déplacer uniquement radialement l'un par rapport aux autres, les moyens de guidage interdisant tout débattement angulaire. De plus, le débattement radial est contrôlé par les dimensions des fenêtres.

Les caractéristiques et avantages de l'invention ressortiront d'ailleurs de la description qui va suivre, en référence aux dessins annexés dans lesquels :

la figure 1 est une vue partielle, en élévation, et avec des arrachements locaux, d'un dispositif amortisseur de torsion suivant l'invention, suivant la flèche I de la figure 2 ;

la figure 2 en est une vue en coupe axiale, suivant la ligne brisée II-II de la figure 1 ;

la figure 3 reprend, à échelle supérieure, le détail de la figure 2 repéré par un encart III sur celle-ci ;

la figure 4 est une vue en perspective d'un des flasques constituant l'organe d'interposition mis en oeuvre suivant l'invention dans ce dispositif amortisseur de torsion, représenté isolément ;

les figures 5A, 5B, 5C sont des vues partielles en élévation illustrant diverses positions possibles pour un tel flasque ;

les figures 6A, 6B, 6C, 6D, 6E, 6F, 6G, 6H sont, supposées développées à plat, des vues simplifiées, en coupe circonférentielle, du dispositif amortisseur de torsion suivant l'invention, illustrant, de manière détaillée, mais schématique, diverses phases successives de fonction de ce dispositif amortisseur de torsion ;

la figure 7 est un diagramme illustratif de ce fonctionnement ;

la figure 8 est une vue partielle en élévation analogue à celle de la figure 1 et concerne une variante de réalisation ;

la figure 9 est une vue partielle en coupe axiale de cette variante de réalisation, suivant la ligne IX-IX de la figure 8 ;

la figure 10 est une vue en perspective des trois flasques constituant, selon un autre mode de réalisation un organe d'interposition selon l'invention ;

la figure 11 est une vue partielle en élévation du mode de réalisation de l'invention représenté à la figure 10 ;

la figure 12 est une vue agrandie d'un détail délimité par l'encart XI de la figure 10 ;

la figure 13 est une coupe selon XIII-XIII d'une partie de l'organe d'interposition représenté à la figure 11.

Ces figures illustrent, à titre d'exemple, l'application de l'invention à une friction d'embrayage, notamment pour véhicule automobile.

Globalement, le dispositif amortisseur de torsion que constitue cette friction d'embrayage comporte trois parties coaxiales A, B, C deux à deux montées rotatives l'une par rapport à l'autre dans les limites d'un débattement angulaire déterminé et à l'encontre de moyens élastiques, communément dits moyens élastiques à action circonférentielle, aptes à agir circonférentiellement entre elles pour une plage au moins d'un tel débattement angulaire.

La partie A est constituée par un simple moyeu 10 destiné à être calé en rotation sur un arbre non représenté, en pratique l'arbre d'entrée de la boîte de vitesses du véhicule concerné, formant arbre mené.

Par exemple, et tel que schématisé, l'alésage interne 11 de ce moyeu 10 est, pour ce faire, cannelé.

La partie B comporte un voile 12, communément dit voile de moyeu, qui forme transversalement une pièce annulaire autour du moyeu 10, avec, entre lui et ledit moyeu 10, des moyens d'engrènement à jeu 13.

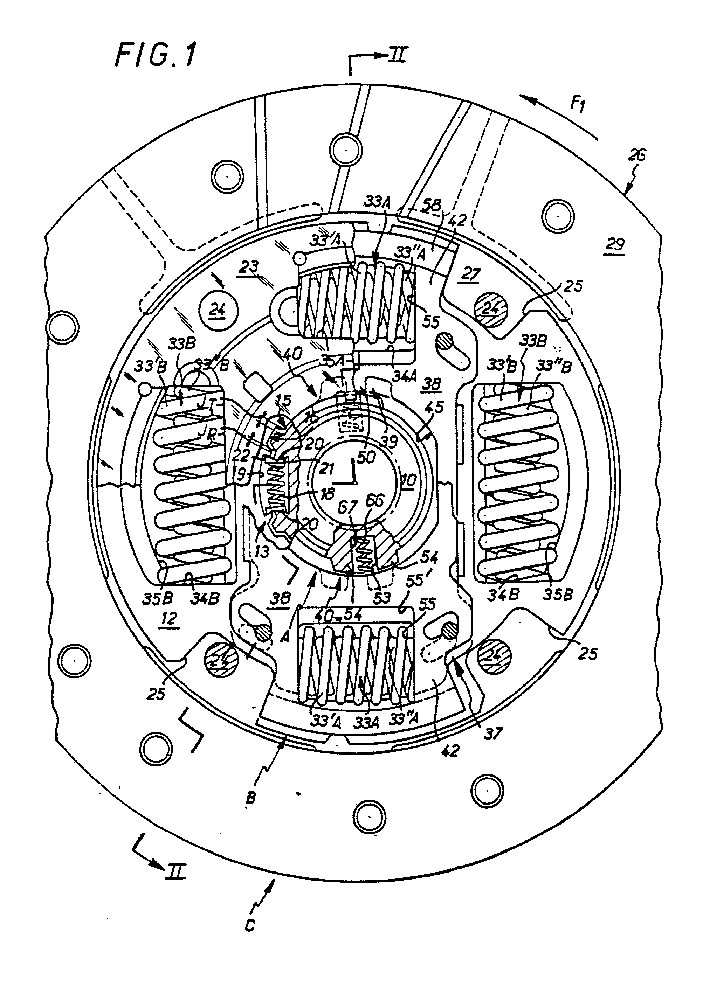

Ces moyens d'engrènement à jeu 13, qui sont visibles notamment sur la figure 1, à la faveur d'un arrachement de celle-ci, interviennent en pratique entre la tranche de la périphérie interne du voile de moyeu 12 et une collerette 14 que porte radialement en saillie à sa périphérie externe le moyeu 10.

Ils comportent, pour le moyeu 10, une denture 15, et, pour le voile de moyeu 12, une denture 16 dont les dents sont imbriquées avec jeu avec celles de la précédente.

Les moyens élastiques a action circonférentielle interposés circonférentiellement entre les parties A, B comportent, dans les formes de réalisation représentées, au moins un ressort 18, qui est disposé dans un logement 19 formé pour partie d'un évidement pris sur la denture 15 du moyeu 10, et, pour partie, d'un évidement pris, en regard du précédent, sur la denture 16 du voile de moyeu 12, et qui, pour la configuration de repos de l'ensemble représentée à la figure 1, porte, à la fois, à chacune de ses extrémités circonférentielles, et par l'intermédiaire en pratique d'un pion d'appui 20 dans ces formes de réalisation, sur un épaulement 21 dudit moyeu 10 et sur un épaulement 22 dudit voile de moyeu 12.

Un tel ressort 18 est un ressort de faible raideur.

En pratique, deux ressorts 18 sont ainsi prévus, en positions diamétralement opposées l'un par rapport à l'autre.

Mais un seul est visible sur les figures.

Pour la configuration de repos de l'ensemble, il existe, circonférentiellement, entre la denture 15 du moyeu 10 et la denture 16 du voile de moyeu 12 un jeu JT, dans un premier sens circonférentiel, qui, tel que repéré par la flèche F1 à la figure 1, est supposé être le sens normal de rotation de l'ensemble, et qui correspond donc à un fonctionnement en "tirage" dudit ensemble, et, pour le sens circonférentiel opposé, qui correspond donc à un fonctionnement en "rétro" de cet ensemble, un jeu JR.

Ces jeux circonférentiels JT, JR peuvent être égaux.

Mais, en pratique, dans les formes de réalisation représentées, le jeu circonférentiel JT est supérieur au jeu circonférentiel JR.

La partie C comporte au moins une rondelle 23, communément dite rondelle de guidage, qui, comme le voile de moyeu 12, et parallèlement à celui-ci, forme transversalement une pièce annulaire autour du moyeu 10, mais sans relation directe avec ce dernier.

En pratique, deux rondelles de guidage 23 sont ainsi prévues, qui, établies axialement à distance l'une de l'autre, sont disposées chacune respectivement de part et d'autre du voile de moyeu 12.

Ces deux rondelles de guidage 23 sont reliées l'une à l'autre par des colonnettes 24, qui, au nombre de quatre dans les formes de réalisation représentées, s'étendent axialement, en traversant avec jeu le voile de moyeu 12, à la faveur d'échancrures 25 prévues à cet effet à la périphérie de celui-ci, et qui, à leurs extrémités, sont rivetées sur lesdites rondelles de guidage 23.

La partie C comporte en outre un disque de friction 26.

Ce disque de friction 26 comporte lui-même, d'une part, un voile 27, qui peut éventuellement être fractionné en pales, et qui, accolé à une rondelle de guidage 23, est solidarisé à celle-ci par les colonnettes 24 la solidarisant déjà à l'autre rondelle de guidage 23, et, d'autre part, à la périphérie externe de ce voile 27, et de part et d'autre de celle-ci, deux garnitures de frottement 29.

Dans les formes de réalisation représentées, le voile 27 du disque de friction 26 s'étend sensiblement sur toute la surface de la rondelle de guidage 13 qu'il flanque, et, pour le centrage de l'ensemble de la partie C ainsi constituée par rapport au moyeu 10 constituant la partie A associée, il est prévu, à la périphérie interne de cette rondelle de guidage 23, entre celle-ci et ledit moyeu 10, un palier 30.

En pratique, ce palier 30 est calé en rotation sur la rondelle de guidage 23 à laquelle il est associé, et il présente, transversalement, entre celle-ci et la collerette 14 du moyeu 11, au contact de cette derniere, une collerette 31.

Par les garnitures de frottement 29 de son disque de friction 26, par serrage de celles-ci entre deux plateaux, la partie C est destinée à être calée en rotation sur un arbre, et il s'agit en pratique de l'arbre de sortie du moteur du véhicule concerné, formant arbre menant.

Dans les formes de réalisation représentées, les moyens élastiques à action circonférentielle interposés circonférentiellement entre la partie B et la partie C comportent une pluralité d'organes élastiques 33A, 33B régulièrement répartis circulairement en étant tous sensiblement disposés tangentiellement à une même circonférence de l'ensemble.

En pratique, dans ces formes de réalisation, il y a ainsi deux organes élastiques 33A, et, en alternance avec ceux-ci, deux organes élastiques 33B, lesdits organes élastiques 33A et 33B étant chacun constitués de deux ressorts à boudin coaxiaux 33'A, 33''A et 33'B, 33''B.

En pratique, les organes élastiques 33A, ont une raideur inférieure à celle des organes élastiques 33B, tout en étant largement supérieure à celle des ressorts 18 précédents.

Ils sont tous chacun logés pour partie dans un évidement 34A, 34B du voile de moyeu 12, en pratique une fenêtre de celui-ci, et pour partie dans des évidements 35A, 35B des rondelles de guidage 23, en pratique des fenêtres de celles-ci.

Dans les formes de réalisation représentées, les fenêtres 34A, 35A, qui sont établies en correspondance de l'une à l'autre, ont, entre elles, un même développement circonférentiel, et il en est de même pour les fenêtres 34B, 35B.

Mais, en variante, et de manière connue en soi, des différences peuvent être établies entre les développements circonférentiels de ces diverses fenêtres, pour une intervention étagée des organes élastiques correspondants au cours du débattement angulaire de l'ensemble.

Les dispositions précédentes sont d'ailleurs bien connues par elles-mêmes, et, ne faisant pas en soi partie de la présente invention, elles ne seront pas décrites plus en détail ici.

De manière également connue en soi, le dispositif amortisseur de torsion suivant l'invention comporte, par ailleurs, un organe d'interposition 37, qui, sensible à la force centrifuge, est monté mobile entre une position d'attente, pour laquelle il est inactif, et, au-delà d'une vitesse de rotation déterminée de l'ensemble, ou vitesse critique, une position de service, pour laquelle, intervenant entre deux de parties constitutives de ce dispositif amortisseur de torsion, pour un sens de rotation relatif au moins de celles-ci, il sollicite, dans ledit sens de rotation, une portion au moins des moyens élastiques à action circonférentielle autres que ceux agissant normalement entre lesdites parties rotatives.

Suivant l'invention, prévu pour intervenir entre la partie rotative B que constitue le voile de moyeu 12 où à laquelle appartient celui-ci, d'une part, et la partie rotative A que constitue le moyeu 10, d'autre part, cet organe d'interposition 37 comporte au moins un flasque 38, qui, monté mobile radialement, en étant guidé, pour ce faire, par le voile de moyeu 12, comporte une denture 39 par laquelle il est adapté à venir en prise, en position de service, avec une denture complémentaire 40 prévue à cet effet sur le moyeu 10, et qui comporte également au moins une patte 42, ou patte d'appui, par laquelle il est apte à agir alors sur une portion au moins des moyens élastiques à action circonférentielle établis entre ledit voile de moyeu 12 et les rondelles de guidage 23.

En pratique, l'organe d'interposition 37 comporte ainsi deux flasques 38, qui sont disposés diamétralement tête-bêche par l'un par rapport à l'autre.

Ces deux flasques 38 présentent chacun des boutonnières 43 par lesquelles ils sont conjointement engagés sur des colonnettes de guidage 44 portées axialement en saillie à cet effet par le voile de moyeu 12.

En pratique, ils s'étendent chacun de part et d'autre de l'axe de l'ensemble, en étant engagés, avec jeu, par une ouverture centrale 45, sur le moyeu 10.

Dans les formes de réalisation représentées, quatre colonnettes de guidage 44 sont prévues sur le voile de moyeu 12, avec, pour les flasques 38, un nombre égal de boutonnières 43, et lesdites colonnettes de guidage 44, et donc aussi lesdites boutonnières 43, sont sensiblement établies en croix, ou autrement dit en X par rapport à l'axe de l'ensemble.

Dans les formes de réalisation représentées, il est associé, au voile de moyeu 12, un contre-voile 46, qui s'étend parallèlement audit voile de moyeu 12, à distance de celui-ci, et qui est solidarisé en rotation à ce voile de moyeu 12 par les colonnettes de guidage 44 portées axialement par celui-ci, lesdites colonnettes de guidage 44 s'étendant axialement, à la manière des colonnettes 24, en étant rivetées, à leurs extrémités, sur ledit voile de moyeu 12 et sur ledit contre-voile 46.

Comme le voile de moyeu 12, le contre-voile 46 présente, pour les organes élastiques 33A, 33B des fenêtres 34A, établies chacune respectivement en correspondance avec celles dudit voile de moyeu 12.

Les flasques 38 constituant suivant l'invention l'organe d'interposition 37 s'étendent entre le voile de moyeu 12 et le contre-voile 46 ainsi associé à celui-ci.

Chacune des boutonnières 43 que comportent l'un et l'autre de ces flasques 38 présente deux tronçons, à savoir un tronçon courbe 48, qui, globalement allongé circulairement, est centré sur l'axe de l'ensemble, en étant disposé sur une même circonférence de celle-ci, et un tronçon droit 49, qui, disposé à l'une des extrémités circonférentielles du précédent, s'étend sensiblement parallèlement au plan diamétral de l'ensemble passant par la zone médiane d'un tel flasque 38.

Pour l'ensemble des boutonnières 43, le tronçon courbe 48 s'étend circonférentiellement d'un même côté du tronçon droit 49 qui lui est associé.

Il s'agit du côté opposé à celui qui, tel que repéré par la flèche F1 sur la figure 1, correspond au sens normal de rotation pour l'ensemble.

Pour deux des boutonnières 43, celles situées du côté opposé à la denture 39, le tronçon droit 49 s'étend en direction opposée à ladite denture 39 à compter du tronçon courbe 48 auquel il est associé ; par contre, pour les deux autres boutonnières 43, celles disposées du côté de la denture 39, il s'étend du côté de celle-ci.

Quoi qu'il en soit, les deux tronçons 48, 49 que présente ainsi chaque boutonnière 43 de l'un et de l'autre des flasques 38 se raccordent l'un à l'autre par des congés de raccordement largement arrondis.

La denture 39 de chaque flasque 38 résulte en pratique d'une découpe de la tranche de son ouverture centrale 45.

Dans les formes de réalisation représentées, elle se réduit à une dent unique 50, encadrée par deux évidements 51.

Conjointement, la denture 40 formée en correspondance sur le moyeu 10, se réduit, pour chaque flasque 38, à une rainure unique 53 ménagée axialement, entre deux bossages axiaux 54, à la périphérie de la collerette radiale 14 de ce moyeu 10, ladite rainure 53 étant complémentaire de la dent 50 d'un tel flasque 38 cependant que lesdits bossages 54 sont eux-mêmes chacun respectivement complémentaires des évidements 51 de celui-ci.

De préférence, et tel que représenté, les dents des dentures complèmentaires 39, 40 ainsi prévues sur les flasques 38, d'une part, et le moyeu 10, d'autre part, ont des flancs légèrement obliques sur un rayon de l'ensemble passant par leur zone médiane, et des bords arrondis, pour faciliter leur engagement mutuel aussi bien que leur désengagement ultérieur.

L'obliquité correspondante est cependant de préférence limitée, par exemple à quelques degrés, afin que la composante radiale qui en résulte pour les efforts transmis entre le moyeu 10 et les flasques 38 lorsque ces derniers sont en prise avec celui-ci ne soit pas à l'origine de contraintes importantes pour ces flasques 38, et, en tout cas, ne soit pas à l'origine de contraintes suffisantes pour conduire alors à un désengagement intempestif desdits flasques 38 vis-à-vis dudit moyeu 10.

Chacun des flasques 38 constituant l'organe d'interposition 37 suivant l'invention comporte au moins un évidement 55 par lequel il est engagé sur un des organes élastiques 33A interposés circonférentiellement le voile de moyeu 12 et les rondelles de guidage 23.

En pratique, dans les formes de réalisation représentées, un tel flasque 38 s'étendant de part et d'autre de l'axe de l'ensemble, il présente ainsi deux évidements 55, 55', qui, disposés chacun respectivement de part et d'autre de l'axe de l'ensemble, en étant en positions sensiblement diamétralement opposées l'un par rapport à l'autre, sont chacun respectivement engagés sur les deux organes élastiques 33A.

Pour chaque flasque 38, l'évidement 55, qui est celui disposé du côté opposé à la denture 39 par rapport à l'axe de l'ensemble, est une fenêtre, tandis que l'évidement 55', qui est donc celui disposé du même côté que la denture 39 par rapport audit axe, est une simple échancrure.

Quoi qu'il en soit, l'un des bords d'un tel évidement 55, 55' constituant les extrémités circonférentielles de celui-ci forme par lui-même la patte d'appui 42 correspondante.

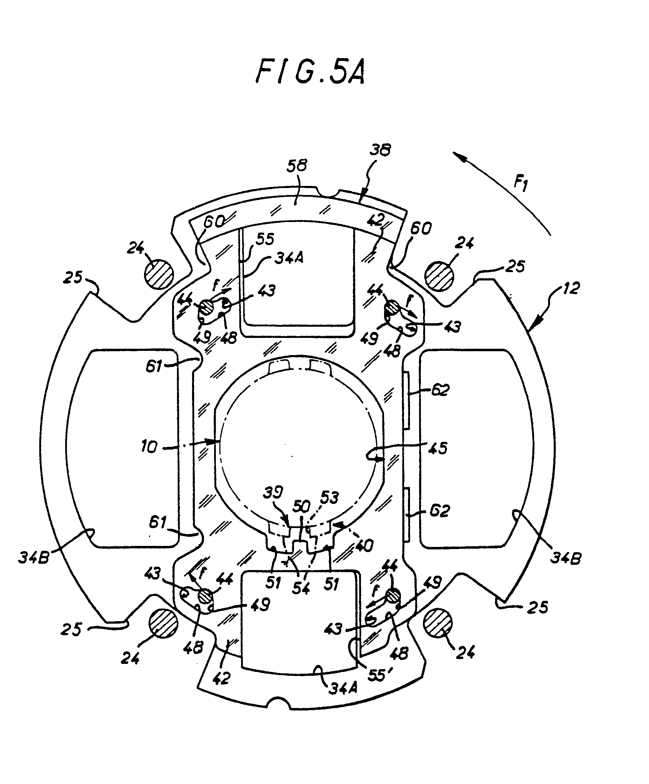

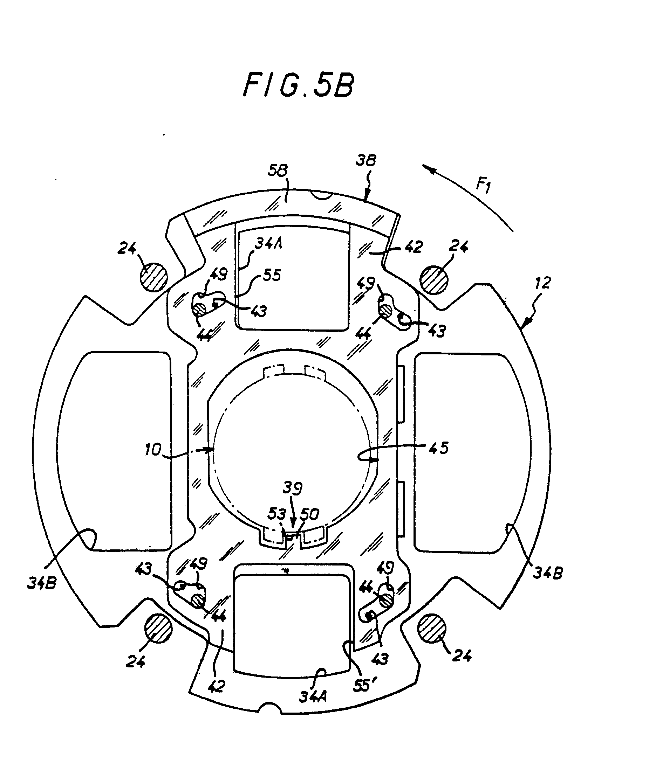

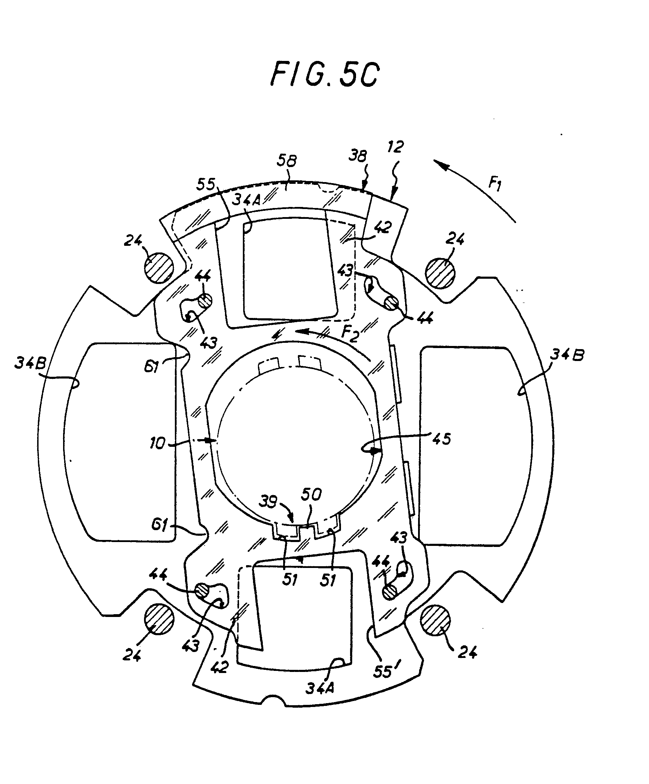

Il s'agit, en pratique, de celui de ces bords qui est en amont, c'est-à-dire en arrière, par rapport au sens circonférentiel correspondant au sens de rotation normal de l'ensemble, tel que repéré par la flèche F1 sur les figures 1 et 5.

De préférence, pour la configuration de repos de l'ensemble, l'autre 57, des bords d'un évidement 55, 55', qui en est donc le bord aval, est à distance de l'organe élastique 33A correspondant.

De préférence, et tel que représenté, pour être plus sûrement sensible à la force centrifuge, chacun des flasques 38 constituant l'organe d'interposition 37 suivant l'invention porte une masselotte 58.

Dans les formes de réalisation représentées, cette masselotte 58 s'étend le long d'un des bords circonférentiels d'un tel flasque 38, et, plus précisément, elle s'étend le long de celui des bords circonférentiels de ce flasque 38 qui est disposé de l'autre côté de l'axe de l'ensemble par rapport à sa denture 39.

Il s'agit, par exemple, tel que représenté, d'une surépaisseur locale d'un tel flasque 38.

Mais il peut s'agir aussi bien d'un repli sur lui-même de celui-ci.

Quoi qu'il en soit, pour chacun des flasques 38, la masselotte 58 s'étend axialement en direction de l'autre de ces flasques 38, en se développant à la faveur de l'épaisseur de celui-ci.

De préférence, son épaisseur propre est inférieure à celle d'un tel flasque 38, pour ne pas faire saillie axialement au-delà de celui-ci.

Latéralement, c'est-à-dire sur ses bords latéraux sensiblement parallèles au plan diamétral de l'ensemble passant par sa zone médiane, chacun des flasques 38 présente des découpes 60 propres à lui permettre de ne pas interférer avec les colonnettes 24 proches, lors du débattement angulaire dudit ensemble.

Sur l'un de ses bords latéraux, il présente en outre des découpes 61, propres également à lui permettre de ne pas interférer avec l'organe élastique 33B correspondant lors d'un tel débattement angulaire.

Le long de l'autre de ses bords latéraux, chacun des flasques 38 présente en outre au moins un retour en équerre 62, par lequel il est axialement engagé sur la tranche latérale opposée de l'autre.

Dans les formes de réalisation représentées, deux retours en équerre 62 sont ainsi prévus sur l'un des bords latéraux de chacun des flasques 38, en étant établis à distance l'un de l'autre.

En pratique, les deux flasques 38 sont axialement au contact l'un de l'autre, et ils y sont maintenus sous la sollicitation de moyens élastiques à action axiale spécifiques, prévus à cet effet.

Dans les formes de réalisation représentées, ces moyens élastiques à action axiale comportent une rondelle Belleville 64, qui, prenant appui sur le voile de moyeu 12, porte sur celui des flasques 38 qui est axialement le plus proche de celui-ci, et qui sollicite donc l'ensemble de ces flasques 38 en direction du contre-voile 46, pour appui sur celui-ci.

Ainsi qu'il est aisé de le comprendre, chaque flasque 38 peut par exemple être réalisé à partir d'un flan métallique, convenablement découpé et plié, soit que la masselotte 58 qu'il porte lui soit convenablement rapportée, par exemple par soudage, soit que, comme mentionné ci-dessus, elle en soit formée par un repli.

Pour un bon coulissement l'un au contact de l'autre, leurs surfaces correspondantes, au moins, sont de préférence munies d'un revêtement en matière synthétique favorable à un tel coulissement, tel que par exemple le polyfluorotétraéthylène.

A l'organe d'interposition 37 ainsi constitué, suivant l'invention, de deux flasques 38, il est associé des moyens de rappel, pour le solliciter en direction de sa position d'attente.

Dans les formes de réalisation représentées, il s'agit de moyens élastiques.

Dans la forme de réalisation plus particulièrement représentée sur les figures 1 à 6, ces moyens élastiques comportent, pour chaque flasque 38, un ressort 66, qui, logé dans un perçage radial 67 du moyeu 10, en étant solidarisé par sa base à celui-ci, est apte à agir sur la dent 50 de la denture 39 d'un tel flasque 38, dans un sens propre à s'opposer à sa pénétration dans la rainure 53 correspondante dudit moyeu 10.

Pour la position de repos de l'ensemble, figure 1, il y a un décalage circonférentiel, égal au jeu circonférentiel JT précédent, entre, d'une part, une telle dent 50, et, d'autre part, une telle rainure 53.

En outre, pour ladite position de repos de l'ensemble, les flasques 38 constituant suivant l'invention l'organe d'interposition 37 sont l'un et l'autre en position d'attente, pour laquelle il y a aussi un décalage radial entre leur denture 39 et la denture 40 correspondante du moyeu 10.

Pour cette position d'attente, pour laquelle il est inactif, c'est par le tronçon droit 49 de ses boutonnières 43 qu'un tel flasque 38 est en prise avec les colonnettes de guidage 44 portées par le voile de moyeu 12, et, plus précisément, par la portion d'un tel tronçon droit 49 de ces boutonnières 43 la plus éloignée du tronçon courbe 48 de celles-ci.

Conjointement, les évidements 55, 55' que présente un flasque 38 se superposent, en plan, avec les fenêtres 34A correspondantes du voile de moyeu 12 et du contre-voile 46, avec, cependant, comme mentionné ci-dessus, un léger décalage circonférentiel, dans le sens circonférentiel qui, tel que repéré par la flèche F1 sur la figure 5A correspond au sens de rotation normal de l'ensemble, du bord 57 de ces évidements 55, 55' opposé à ces pattes d'appui 42.

Chacun des flasques 38 constituant l'organe d'interposition 37 suivant l'invention reste ainsi en position d'attente tant que la vitesse de rotation de l'ensemble demeure inférieure à une vitesse critique déterminée, de l'ordre par exemple de 800 t/mn.

Dès que cette vitesse critique est atteinte, chacun de ces flasques 38 se déplace radialement sous la sollicitation de la force centrifuge dont il est alors l'objet, en étant guidé au cours de ce déplacement radial par les colonnettes de guidage 44 avec lesquels il est en prise, tout se passant comme si ceux-ci parcouraient alors le tronçon droit 49 de ses boutonnières 43 correspondantes.

Si, pour une telle vitesse critique, la denture 39 de chacun des flasques 38 se trouve être circulairement en regard de la denture 40 correspondante du moyeu 10, comme représenté à la figure 5A, un tel flasque 38 passe alors en position de service, pour laquelle, au terme de son déplacement radial, et comme représenté à la figure 5B, il est en prise, par sa dite denture 39, avec ladite denture 40 correspondante du moyeu 10.

Le tronçon courbe 48 de ses boutonnières 43 se trouve alors en regard des colonnettes de guidage 44 correspondants du voile de moyeu 12, en s'étendant suivant la circonférence sur laquelle se trouvent ceux-ci.

Dès lors, et tel qu'illustré pour l'un d'eux sur la figure 5C, chacun des flasques 38 constituant suivant l'invention l'organe d'interposition 37 peut pivoter autour de l'axe de l'ensemble par rapport au voile de moyeu 12, tout se passant comme si les colonnettes de guidage 44 portées par celui-ci parcouraient alors le tronçon courbe 48 de ses boutonnières 43.

Par construction, et pour des raisons qui apparaîtront ci-après, le développement circonférentiel du tronçon 48 de ces boutonnières 43 est fait au moins égal, angulairement, à la totalité du jeu circonférentiel JT, JR des moyens d'engrènement à jeu 13 intervenant entre le voile de moyeu 12 et le moyeu 10.

Quoi qu'il en soit, et ainsi que l'illustre la figure 5C pour l'un d'eux, au cours d'un tel pivotement, chacun des flasques 38 interfère, en plan, par ses pattes d'appui 42, avec les fenêtres 34A du voile de moyeu 12, et donc avec les logements des organes élastiques 33A, et il est ainsi apte à agir sur ces derniers pour en solliciter l'intervention.

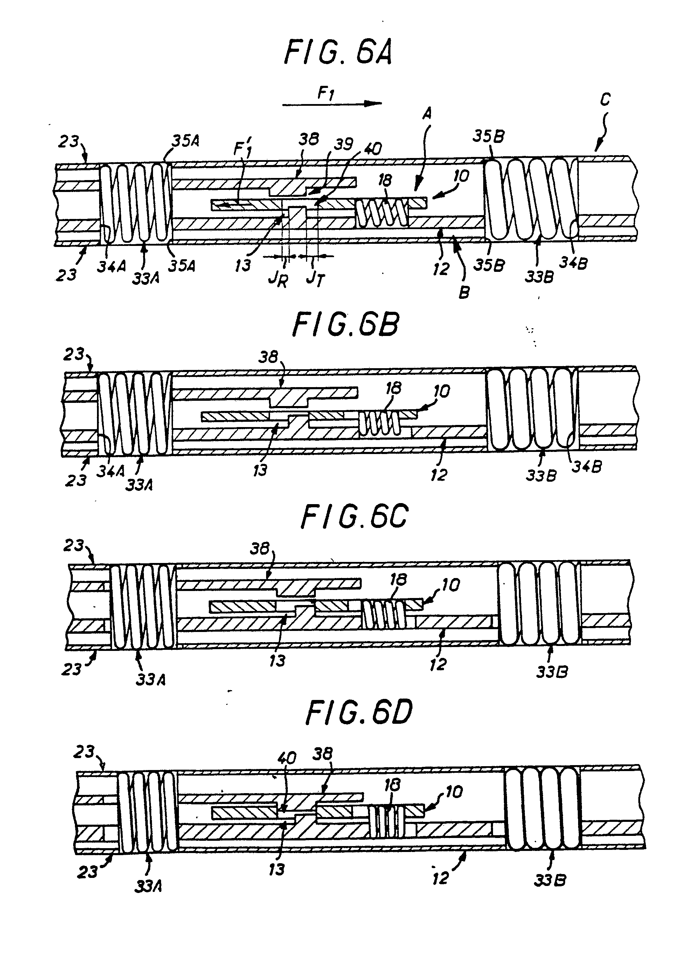

Le fonctionnement spécifique des flasques 38 constitutifs del'organe d'interposition 37 suivant l'invention étantainsi exposé, on se reportera, maintenant, pourle fonctionnement de l'ensemble, aux figures 6A à 6H.

Il s'agit de figures schématiques, sur lesquelles les constituantsen cause n'ont été que très globalement représentés.

C'est ainsi, par exemple, que le moyeu 10 n'y figure que sous la forme d'une simple barrette, et qu'un même évidement de celle-ci participe, d'une part, aux moyens d'engrènement à jeu 13 prévus entre ce moyeu 10 et le voile de moyeu 12, et, d'autre part, à la denture 40 par laquelle un tel moyeu 10 doit coopérer avec la denture 39 d'un flasque 38, les dentures correspondantes dudit voile de moyeu 12 et dudit flasque 38 n'étant par ailleurs représentées que par un bossage propre à pénétrer dans un tel évidement.

Seul l'un des flasques 38 n'a d'ailleurs été représenté sur ces figures, et, de même, un seul ressort 18, un seul organe élastique 33A, et un seul organe élastique 33B.

Le contre-voile 46 n'y a pas été représenté du tout.

Par contre, les deux rondelles de guidage 23 y figurent l'une et l'autre.

Comme mentionné ci-dessus, et tel que représenté à la figure 6A, il existe, circonférentiellement, au repos, entre la denture 39 d'un flasque 38 et la denture 40 correspondante du moyeu 10, un décalage circonférentiel correspondant au jeu circonférentiel JT des moyens d'engrènement à jeu 13 prévus entre le voile de moyeu 12 et le moyeu 10.

Lorsque, enfonctionnement, un couple est appliqué à la partie C, et donc aux rondelles de guidage 23 appartenant à celles-ci, ce sont, normalement, ces rondelles de guidage 23, qui, entraînées dans le sens de rotation de l'ensemble, tel que repéré par la flèche F1 à la figure 6A, ont tendance à entraîner, par l'intermédiaire des divers moyens élastiques à action circonférentielle en jeu, le moyeu 10.

Pour simplifier l'exposé qui va suivre, on supposera cependant ici que, à l'inverse de ce processus, c'est le moyeu 10 qui, suivant un sens circonférentiel inverse du précédent, tel que repéré par la flèche F1 sur la figure 6A, a tendance à entraîner, par l'intermédiaire desdits moyens élastiques à action circonférentielle, les rondelles de guidage 23.

Dans un premier temps, seuls cèdent d'abord élastiquement les ressorts 18 interposés circonférentiellement entre le moyeu 10 et le voile de moyeu 12, ces ressorts 18 présentant en effet, comme mentionné ci-dessus, une raideur relativement faible, très inférieure en tout cas à celle des organes élastiques 33A, 33B.

Cette première phase de fonctionnement se poursuit jusqu'à ce que, les ressorts 18 étant saturés, le jeu circonférentiel JT des moyens d'engrènement à jeu 13 entre le moyeu 10 et le voile de moyeu 12 soit absorbé, figure 6B.

Au cours de cette première phase de fonctionnement, tout se passe come si les parties B, C, c'est-à-dire le voile de moyeu 12 et les rondelles de guidage 23, étaient angulairement verrouillées l'une sur l'autre, compte tenu de la raideur relativement grande des organes élastiques 33A, 330 interposés entre elles.

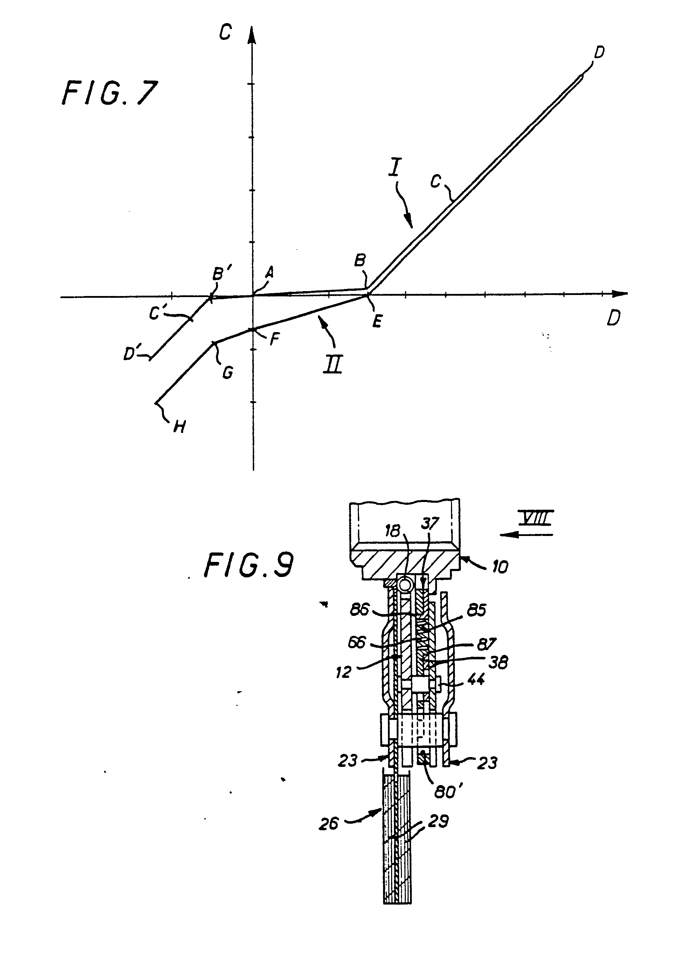

Sur le diagramme de la figure 7, sur lequel ont été reportés, en abscisses, le débattement angulaire D global entre les parties A, C, et, en ordonnées, le couple C transmis de l'une à l'autre de celles-ci, la courbe représentative de ce fonctionnement est un segment de droite AB, qui, issu de l'origine, a une pente relativement faible, à l'image de la raideur des seuls ressorts 18 ayant jusque là intervenu.

Ainsi qu'on le notera, au terme de la première phase de fonctionnement explicitée ci-dessus, la denture 39 de chacun des flasques 38 constituant suivant l'invention l'organe d'interposition 37 se trouve angulairement au droit de la denture 40 correspondante du moyeu 10, tel que schématisé à la figure 6C.

En effet, par les colonnettes de guidage 44 portées par le voile de moyeu 12, chacun des flasques 38 se trouve temporairement solidarisé en rotation avec le voile de moyeu 12, ce qui pallie les conséquences d'une éventuelle inertie qui pourrait conduire ces flasques 38 à rester circonférentiellement en retrait par rapport aux rondelles de guidage 23, et donc à rester circonférentiellement à niveau avec le moyeu 10.

Les colonnettes de guidage 44 du voile de moyeu 12 portent pour ce faire sur celui des flancs du tronçon courbe 49 des boutonnières 43 des flasques 38 qui est circonférentiellement le plus proche de l'extrémité opposée du tronçon courbe 48 de ces boutonnières 43, suivant les flèches f de la figure 5A.

Ainsi entraînés par le voile de moyeu 12, les flasques 38 se trouvent donc bien avoir alors rattrapé leur décalage circonférentiel initial sur le moyeu 10, à la mesure du jeu circonférentiel JT entre le voile de moyeu 12 et celui-ci.

Le couple C appliqué à la partie C augmentant, les organes élastiques 33A, 33B interviennent à leur tour, en ajoutant leurs effets à ceux des ressorts 18, qui restent comprimés, et donc saturés.

En effet, tout se passe comme si, pour le sens circonférentiel concerné, le voile de moyeu 12 se trouvait verrouillé angulairement sur le moyeu 10, en sorte que les organes élastiques 33A, 33B sont dès lors sollicités en compression entre, d'une part, leur appui sur ce voile de moyeu 12, et, d'autre part, leur appui sur les rondelles de guidage 23.

Ainsi donc, au cours de la deuxième phase de fonctionnement qui commence alors, ces organes élastiques 33A, 33B sont progressivement comprimés, figure 6C.

Cette deuxième phase de fonctionnement se poursuit jusqu'à ce que, figure 6D, il se produise un appui positif, pour le sens circonférentiel concerné, entre la partie B à laquelle appartient le voile de moyeu 12 et la partie C à laquelle appartiennent les rondelles de guidage 23, soit que certains au moins des organes élastiques 33A, 33B intervenant entre ces parties B, C viennent alors à spires jointives, soit que les colonnettes 24 reliant l'une à l'autre les rondelles de guidage 23 viennent au contact du bord circonférentiel correspondant des échancrures 25 du voile de moyeu 12 qu'elles traversent.

Sur le diagramme de la figure 7, la courbe représentative de cette deuxième phase de fonctionnement est un deuxième segment de droite BCD, de pente nettement supérieure à celle du segment de droite AB précédent, à l'image de la raideur, relativement élevée, des organes élastiques 33A, 33B.

Le fonctionnement décrit précédemment est du type dit en "tirage", le couple moteur appliqué à la partie C étant supérieur au couple résistant dont est l'objet la partie A entraînée.

Ainsi qu'on le notera, et compte tenu du décalage circonférentiel prévu entre le bord 57 de leurs évidements 55, 55' et les bords correspondants des fenêtres 34A du voile de moyeu 12 et du contre-voile 46, pour un tel fonctionnement en tirage, les flasques 38 constitutifs suivant l'invention de l'organe d'interposition 37 ne participent pas à la transmission du couple entre les parties C et A.

Si à un quelconque instant, passant d'un fonctionnement en tirage, à un fonctionnement dit en "rétro", le couple entre les parties C et A s'inverse, et si, pour la clarté de l'exposé, il est momentanément fait abstraction de l'organe d'interposition 37, un processus inverse du précédent se développe, avec, d'abord, détente des organes élastiques 33A, 33B, puis des ressorts 18, suivant les segments de droite DCB et BA.

Cette détente, qui est quasi instantanée, est ensuite suivie d'une recompression, mais en sens circonférentiel opposé au précédent, d'abord des ressorts 18, puis des organes élastiques 33A, 33B, suivant des segments de droite AB' et B'C'D', de même type que les précédents.

Mais, en réalité, et tel que schématisé à la figure 6D, dans l'intervalle, à supposer que la vitesse de rotation de l'ensemble soit supérieure à la vitesse critique correspondante, les flasques 38 constitutifs suivant l'invention de l'organe d'interposition 37 sont intervenus, chacun de ces flasques étant alors passé de sa position initiale d'attente à sa position de service pour laquelle, par sa denture 39, il est en prise avec la denture 40 correspondante du moyeu 10, et est donc dès lors solidarisé en rotation à celui-ci.

Par suite, le fonctionnement, en "rétro", se trouve modifié.

Pour un tel fonctionnement en "rétro", c'est maintenant le moyeu 10 qui tend à entraîner circonférentiellement l'ensemble, par l'intermédiaire des divers moyens élastiques à action circonférentielle en jeu, tout se passant comme si, par rapport au voile de moyeu 12 et aux rondelles de guidage 23, et tel que schématisé par la flèche F'2 sur la figure 63, ce voile de moyeu 12 se déplaçait suivant un sens circonférentiel identique à celui, repéré par la flèche F1, qui correspond au sens normal de rotation, naturellement inchangé, dudit ensemble.

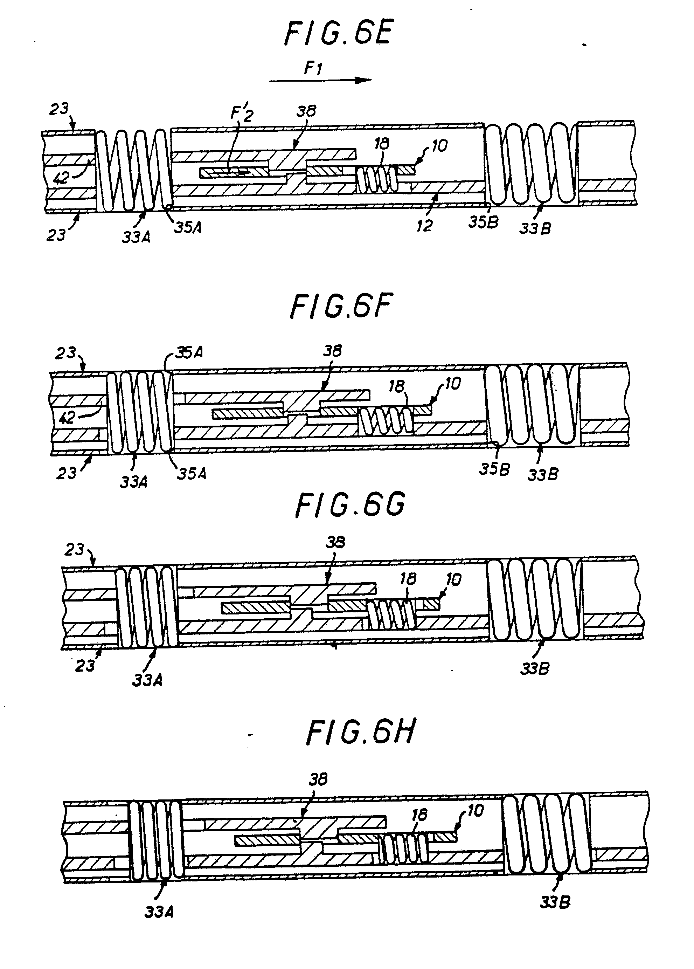

Dans un premier temps, et comme précédemment, il y a d'abord une détente, quasi instantanée, des organes élastiques 33A, 33B, figure 6E, suivant un segment de droite DE sensiblement identique au segment de droite DCB précédent sur le diagramme de la figure 7.

Mais, au terme de cette détente des organes élastiques 33A, 33B, chacun des flasques 38 constitutifs suivant l'invention de l'organe d'interposition 37, entraîné par le moyeu 10, vient, par ses pattes d'appui 42, agir sur les organes élastiques 33A.

Au cours de la nouvelle phase de fonctionnement qui commence alors, les organes élastiques 33A se trouvent donc progressivement sollicités en compression, entre, d'une part, leurs appuis sur les rondelles de guidage 23, et, d'autre part, la patte d'appui 42 correspondante des flasques 38.

Tant que le débattement angulaire correspondant reste inférieur au jeu circonférentiel JT des moyens d'engrènement à jeu 13 entre le moyeu 10 et le voile de moyeu 12, il y a, conjointement, détente des ressorts 18, figure 6F.

Il y a, ensuite, une recompression, limitée, et en sens opposé, de ces ressorts 18, jusqu'à absorption du jeu circonférentiel JR subsistant encore entre le moyeu 10 et le voile de moyeu 12, figure 6G.

La courbe représentative de cette deuxième phase de fonctionnement est donc constituée de deux segments de droite EF, FG successifs, qui, dans leur ensemble, s'écartent très nettement des segments de droite BA, AB' précédents, en présentant, entre eux, une légère brisure, figurative de la recompression des ressorts 18.

Ainsi, au cours de cette phase de fonctionnement, qui correspond aux valeurs de couple C faibles, les ressorts 18 sont empêchés d'agir seuls, les organes élastiques 33A, qui sont de raideur nettement supérieure, étant au contraire alors mis en service par les flasques 38 constitutifs suivant l'invention de l'organe d'interposition 37.

Il y a enfin, une recompression progressive des organes élastiques 33B, ceux-ci ajoutant alors leurs effets, aussi bien à ceux des organes élastiques 33A, qu'aux ressorts 18, qui demeurent légèrement comprimés, figure 6H.

La courbe représentative de cette denière phase de fonctionnement est un segment de droite GH de pente identique à celle du segment de droite B'C'D' précédent.

Ainsi, suivant que, en "rétro", les flasques 38 constitutifs suivant l'invention de l'orange d'interposition 37 sont, ou non, en service, la courbe représentative du fonctionnement de l'ensemble est celle, II, formée des segments de DE, EFG, et GH, ou celle, I, formée des segments de droite DCB, BAB', et B'C'D'.

En pratique, il suffit d'une vitesse de rotation relativement faible pour que ces flasques 38 demeurent ainsi en service.

Lorsque, cependant, cette vitesse de rotation tombe en dessous de la vitesse critique choisie, les ressorts 66 associés à ces flasques 38 rappellent ceux-ci en position d'attente.

Bien entendu, dans ce qui précède, et pour simplification de l'exposé, il n'a pas été tenu compte du phénomène d'hystérésis se développant, lors du débattement angulaire D, en raison des frottements entre les parties A, B, C concernées.

Ainsi qu'on le sait, un tel phénomène d'hystérésis conduit à une différentiation, pour un débattement angulaire D donné, entre la valeur de couple correspondant à une évolution croissante de celui-ci, et celle correspondant à son évolution décroissante.

Dans les formes de réalisation représentées, sont prévues à cet effet, en sus du palier 30, qui intervient entre les parties C et A, diverses rondelles de frottement.

Il y a, ainsi, une première rondelle de frottement 70, qui, disposée du côté de la collerette radiale 14 du moyeu 10 opposé au palier 30, est maintenue au contact du flanc correspondant de cette collerette radiale 14 par une rondelle élastique 71, une rondelle Belleville par exemple, prenant appui sur la rondelle de guidage 23 proche.

Il y a en outre, une deuxième rondelle de frottement 72, qui, disposée du côté du contre-voile 46 tourné vers la rondelle de guidage 23 proche, est maintenue au contact de ce contre-voile 46 par une rondelle élastique 74, une rondelle Belleville par exemple, prenant appui sur ladite rondelle de guidage 23.

Il y a enfin, entre le voile de moyeu 12 et le voile 27 du disque de friction 26, une troisième rondelle de frottement 75, qui, comme la rondelle de frottement 72, est soumise aux effets de la rondelle élastique 74 associée à cette dernière.

Ainsi qu'il est aisé de le comprendre, la rondelle de frottement 70 est la seule, avec le palier 30, à déployer ses effets aux faibles valeurs de couple, lorsque, comme décrit ci-dessus, l'ensemble constitué par les parties B,C se débat pratiquement d'un seul tenant par rapport à la partie A constituant le moyeu 10.

Par contre, les rondelles de frottement 72, 75 déploient leurs effets lorsque, les organes élastiques 33A, 33B intervenant, il y a un débattement angulaire entre les parties B,C l'une par rapport à l'autre.

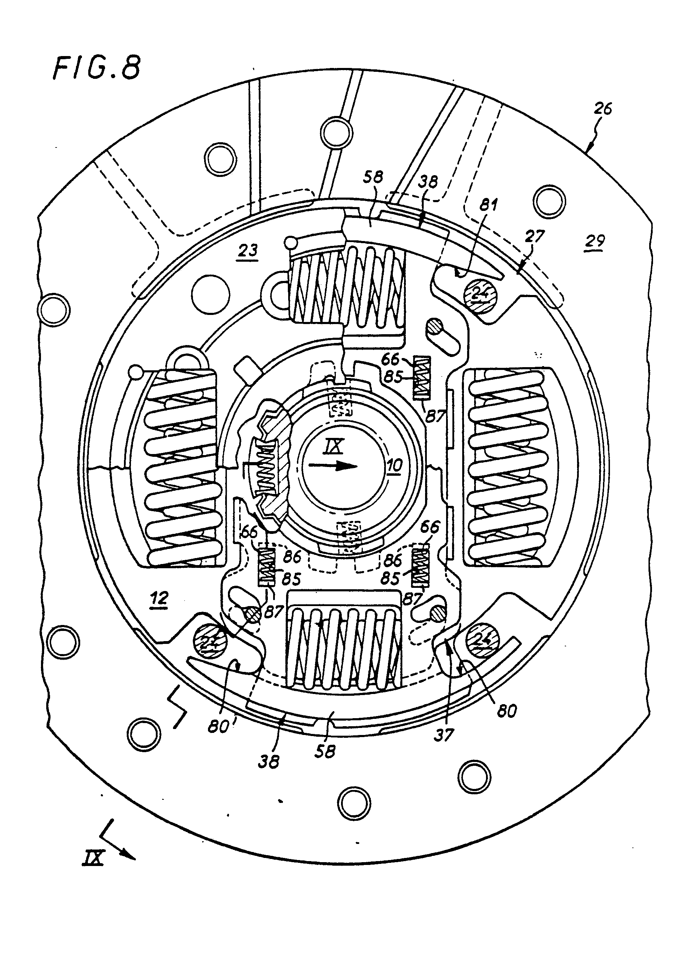

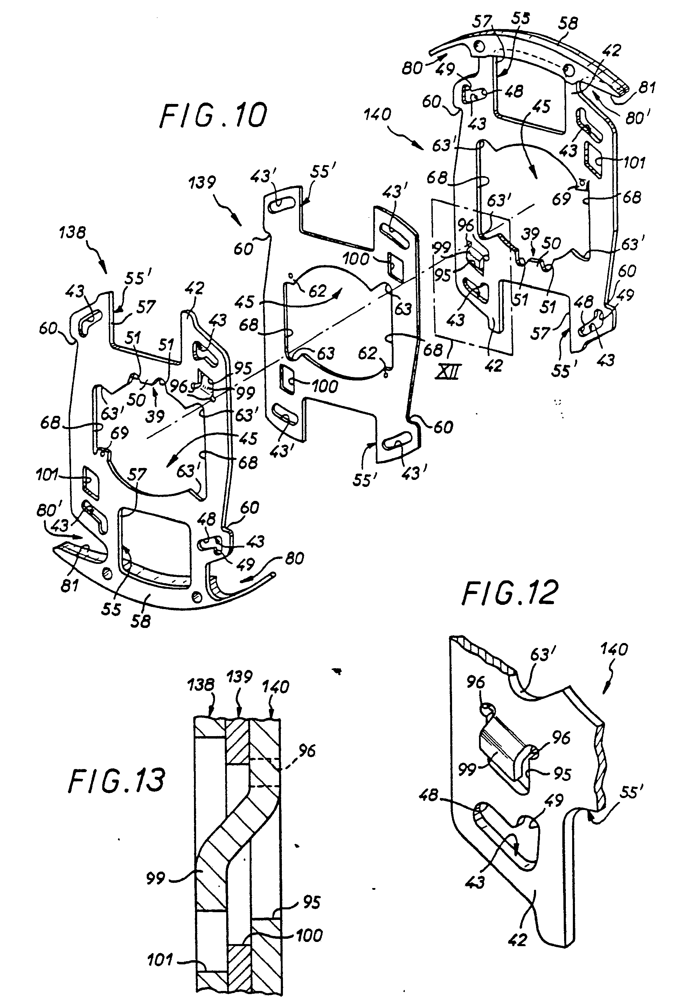

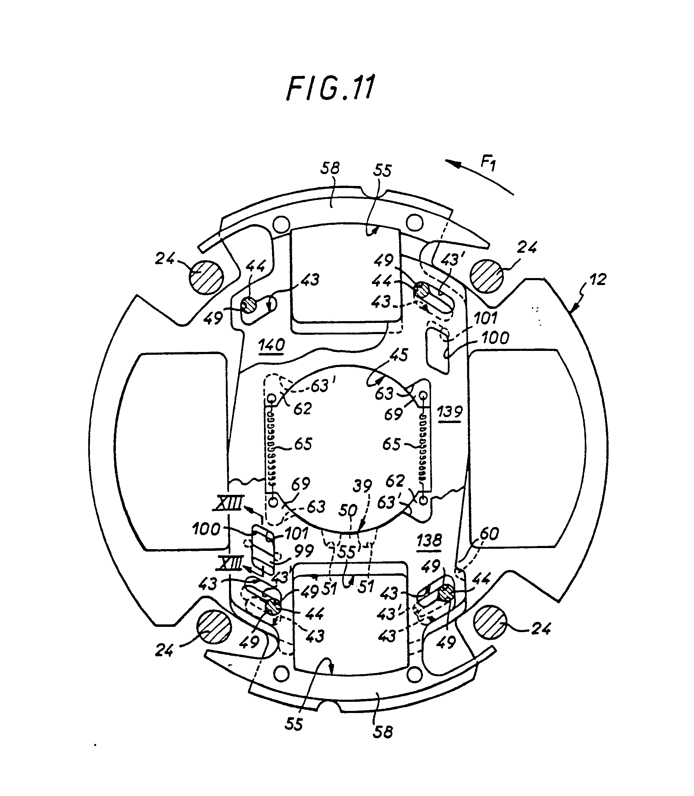

Dans la variante de réalisation illustrée par les figures 8, 9, chacun des flasques 38 constitutifs suivant l'invention de l'organe d'interposition 37 présente, sur l'un de ses bords latéraux, une échancrure 80, qui s'étend circonférentiellement, et par laquelle il est engagé sur la colonnette 24 proche.

En pratique, chacun de ces flasques 38, présente ainsi deux échancrures 80, 80' disposées chacune respectivement sur ces deux bords latéraux.

Pour l'une au moins desdites échancrures, en l'espèce, l'échancrure 80' circonférentiellement du côté opposé à celui de la découpe 60, le flanc 81 radialement extérieur est globalement oblique sur la tangente à la circonférence passant par l'extrémité de ce flanc.

De fait, ce flanc 81 se trouve formé par un prolongement circonférentiel de la masselotte 58 associée.

Le flanc 81 a pour but d'éviter, lorsque le jeu JT vient en fin de course, le blocage d'un flasque 38.

En effet, le flanc 81, par son obliquité par rapport à la tangente définie ci-dessus, est apte à coopérer avec la colonnette 24 pour faciliter le passage du flasque correspondant de la position de repos à la position d'action.

En effet, la colonnette 24 ayant tendance à s'approcher du plan diamétral de l'ensemble passant par la zone médiane des flasques 38 de l'organe d'interposition, elle exerce une force d'appui sur le flanc 81, force dont une composante radiale, dûe à l'obliquité de ce flanc, facilite le déplacement radial du flasque vers l'extérieur.

Conjointement, l'échancrure 80 a pour but un équilibrage convenable de l'ensemble.

Les flancs de cette échancrure 80 sont ici, parallèles au bord circonférentiel externe du flasque et de la masselotte 58 associée.

Par ailleurs, dans la forme de réalisation représentée sur les figures 8, 9, les ressorts de rappel 66 associés aux flasques 38 sont au nombre de quatre, et ils sont communs à l'un et l'autre de ces flasques 38, en étant établis dans des fenêtres 85 formées en pleine surface dans l'un et l'autre de ceux-ci, suivant une disposition en X comparable à celle des colonnettes de guidage 44 portées par le voile de moyeu 12, et en prenant appui, chacun, d'une part, à une première de leurs extrémités, sur une patte 86, qui, issue en équerre de l'un de ces flasques 38, est engagée dans la fenêtre 85 correspondante de l'autre de ceux-ci, et, d'autre part, à l'autre de leurs extrémités, sur une patte 87, qui issue elle-même en équerre dudit autre flasque 38, pénètre, comme la précédente, dans la fenêtre 85 correspondante du premier de ceux-ci.

Selon un autre mode de réalisation particulièrement avantageux de l'invention, tel que décrit aux figures 10 à 13, un organe d'interposition 37 comporte trois flasques 138, 139, et 140, globalement superposés. Les flasques 138 et 140, dits mobiles, sont montés mobiles radialement, de part et d'autre du flasque 139, dit intermédiaire, fixe radialement.

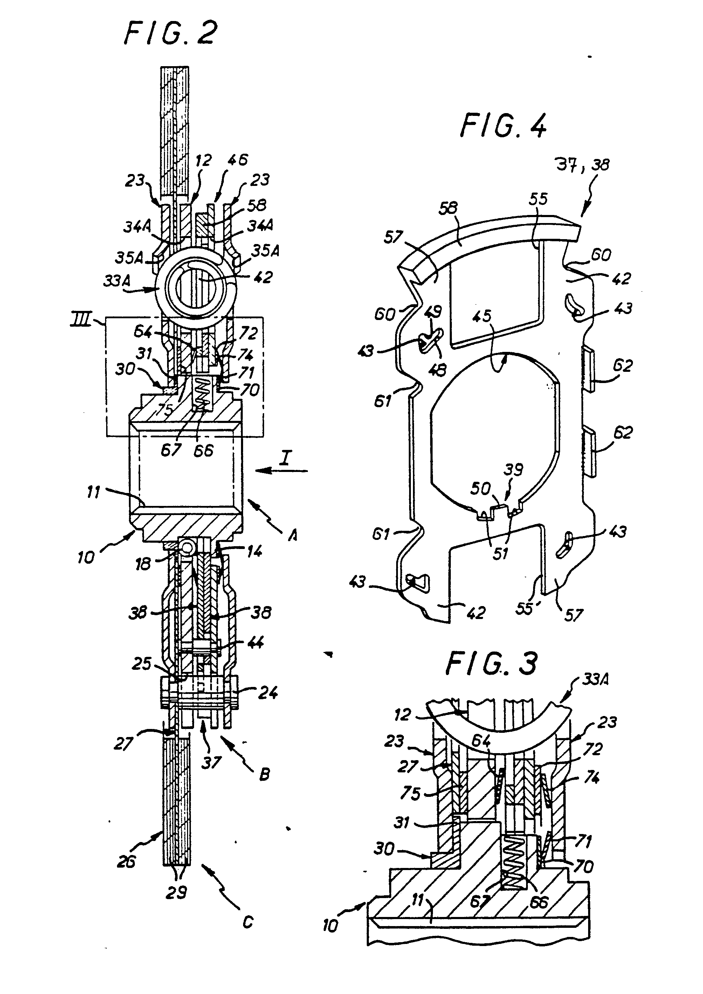

De façon similaire aux modes de réalisation de l'invention précédemment décrits, les trois flasques 138, 140 et 139 présentent respectivement chacun des boutonnières 43, 43' par lesquels ils sont engagés sur des colonnettes de guidage 44 (figure 2), portés axialement en saillie à cet effet par le voile de moyeu 12.

Aux boutonnières 43 des flasques mobiles 138, 140 similaires aux flasques 38 de l'organe d'interposition selon les modes de réalisation précédemment décrits, correspondent des boutonnières 43' ménagées dans le flasque 139.

Les boutonnières 43' ne comportent qu'un seul tronçon courbe 48, globalement allongé circonférentiellement, centré sur l'axe de l'ensemble. Elles coopèrent ainsi avec les colonnettes de guidage 44 pour maintenir la position radiale du flasque intermédiaire 139, qui est radialement fixe.

De même que les flasques 138, 140 comportent des évidements 55, 55' identiques aux évidements des flasques 38, le flasque intermédiaire 139 comporte deux évidements 55' diamétralement opposés, qui sont en fait des échancrures.

Ces évidements 55' du flasque intermédiaire engagent celui-ci sur un des organes élastiques 33A, de façon similaire à l'engagement des évidements 55, 55' des flasques mobiles.

De préférence, dans ce mode particulier de réalisation représenté aux figures 10 à 13, les découpes 60 sont rectilignes et en liaison sensiblement à partir de la zone médiane de chaque flasque perpendiculaire à la direction du débattement des flasques mobiles.

De telles découpes 60 sont propres à permettre aux flasques 138, 139, 140 de ne pas interférer, lors de leurs débattements angulaires, avec l'organe élastique 33B correspondant à un tel débattement angulaire de l'organe d'interposition.

De manière similaire au mode de réalisation décrit précédemment, et représenté aux figures 8 et 9, chacun des flasques 138, 140 présente deux échancrures 80, 80' , disposées chacune respectivement sur ces deux bords latéraux.

La forme et la fonction de telles échancrures 80, 80' sont identiques, à celles précédemment décrites.

Un des avantages particuliers du mode de réalisation de l'invention représenté aux figures 10 à 13 est de permettre un déplacement radial des flasques mobiles 138, 140 indépendamment l'un de l'autre.

En effet, en pratique, lorsque l'un des flasques mobiles tend à se mettre en position de service préalablement à l'autre flasque mobile, soit pour des raisons de moindre friction, ou en raison d'une variation de construction dans la répartition des masses, d'un flasque à l'autre, il tend à empêcher ce dernier de se déplacer radialement, par la tension qu'il exerce sur les moyens élastiques les reliant l'un à l'autre.

Le rattachement de chacun des flasques mobiles 138, 140 par des moyens élastiques indépendants au flasque intermédiaire 139, fixe radialement, évite cet inconvénient.

Plus précisément, le flasque intermédiaire 139 sert de support de rattachement aux flasques mobiles.

Les moyens de rattachement ménagés sur les flasques comprennent (Fig. 11) :

- des pattes d'attache 62, 69, munies de perforations orientées axialement et les traversant;

- des moyens élastiques, constitués de ressorts 65, pouvant s'accrocher sur ces pattes d'attache, et les reliant deux à deux;

- des découpes 63, 63' servant de dégagements afin d'éviter que les ressorts 65 et les pattes d'attache 69 ne viennent bloquer les flasques ou frotter contre ceux-ci, ce qui perturberait leurs déplacements radiaux.

Plus précisément, les pattes d'attache 62, 69 et les découpes 63, 63' sont disposées sur chacun des flasques, quadrangulairement dans les zones d'angle d'un carré circonscrit à l'ouverture centrale 45.

Les flasques mobiles 138, 140 comportent chacun une patte d'attache 69, tandis que le flasque intermédiaire 139 comporte deux pattes d'attache 62, diamétralement opposées, c'est-à-dire disposées selon une diagonale.

En superposant les trois flasques 138, 139, 140, les pattes d'attache 69 des deux flasques mobiles 138, 140 se trouvent disposées sur l'autre diagonale.

Ainsi, les pattes d'attache 62 et les pattes d'attache 69 sont en quadrature.

Comme il est visible sur la figure 11, les ressorts 65 relient chacun une patte d'attache 69 d'un flasque mobile 138, 140 à l'une des pattes d'attache 62 du flasque intermédiaire 139.

Ces ressorts 65 sont tous deux disposés parallèlement au plan diamétral de l'ensemble, médian des flasques, et relient donc des pattes d'attache disposées en quadrature.

En pratique, les ressorts 65 sont attachés aux pattes d'attache 62, 69 par le passage d'une boucle d'extrémité dans les perforations dont les pattes d'attache sont munies à cet effet.

Ces boucles forment nécessairement une saillie axiale hors de l'épaisseur de la patte d'attache.

'Afin d'éviter que ces boucles ne forment saillie à l'extérieur des plans superficiels de l'ensemble de l'organe d'interposition 37, les pattes d'attache 69 des flasques 138, 140 sont légèrement repliées axialement vers l'intérieur, c'est-à-dire vers les flasques qu'elles affrontent.

Afin de permettre le libre débattement radial des flasques mobiles 138, 140 par rapport au flasque intermédiaire, radialement fixe, 139, des découpes 63 et 63' sont ménagées dans ces flasques pour permettre ce débattement, d'une part, et le logement des ressorts 65 d'autre part.

En effet, les pattes d'attache 69, axialement en saillie vers le flasque intermédiaire, pénètrent dans la découpe 63 adjacente de celui-ci.

Cette découpe 63 est, du côté opposé à la patte 62, suffisamment dégagée pour permettre le débattement de la patte 69 qui y pénètre lorsque le flasque mobile correspondant se déplace radialement vers l'extérieur jusqu'à sa position dite de service.

De même, les boucles d'extrémités des ressorts 65 passant dans les perforations des pattes d'attache 62 du flasque intermédiaire 139 sont en saillie axialement vers l'extérieur des deux côtés de celui-ci.

Aux découpes 63, 63' ménagées dans les flasques sont raccordés des tronçons droits 68 destinés à dégager la place nécessaire pour le logement des ressorts 65.

Les découpes d'angle 63' de chaque flasque mobile dégagent elles-mêmes l'espace nécessaire pour le logement des boucles d'extrémités des ressorts 65 et pour le libre débattement de la patte 69 de l'autre flasque mobile.

Ainsi, les deux ressorts 65, en pratique de faible raideur, sont disposés selon une direction générale parallèle au plan diamétral de l'ensemble, médian des flasques.

De la sorte, ces ressorts tendent à s'opposer à l'écartement des flasques mobiles 138, 140 radialement vers l'extérieur, c'est-à-dire vers leur position de service.

En pratique, ces ressorts 65, dits de rappel, n'empêchent pas cet écartement au delà d'un certain seuil de force centrifuge tendant à écarter les flasques mobiles vers l'extérieur, mais l'empêchent en deçà de ce seuil.

Ces ressorts servent également à ramener les flasques de la position de service, vers la position initiale, ou position de repos quand la force centrifuge diminue.

Chacun des flasques mobiles 138, 140 comporte comme le représentent les figures 10, 12 et 13, à proximité de l'une de ses quatre boutonnières 43 et radialement à l'intérieur par rapport à celle-ci une découpe 95 formant un crevé 99 sensiblement suivant trois côtés d'un parallélogramme.

Le crevé 95 est situé, dans le mode de réalisation représenté, sensiblement sur une diagonale définie par une découpe 63' et une patte d'attache 69, du côté de cette dernière.

Une telle découpe 99 est terminée à chacune des deux extrémités de sa racine par un poinçonnage 96, ceci afin d'éviter un éventuel déchirement du flasque en prolongement du crevé 99.

Le crevé 99, dit de guidage, formé par la découpe 95 est replié en saillie axiale, parallèlement au plan général du flasque dont il fait partie.

Plus précisément, un tel crevé de guidage 99 est en saillie axiale vers les deux autres flasques, saillie ne dépassant pas l'épaisseur des deux autres flasques superposés, de manière à ne pas dépasser de l'élément d'interposition 37.

Le flasque intermédiaire 139 comporte deux fenêtres 100 aptes à coopérer avec les deux crevés de guidage 99 respectives des deux flasques mobiles 138, 140.

Ces deux flasques mobiles étant disposés tête-bêche de part et d'autre du flasque intermédiaire 139, comme décrit précédemment, les deux fenêtres 100 sont disposées symétriquement de part et d'autre de la diagonale passant par les deux découpes 63.

Comme le montre la figure 13, ces fenêtres sont suffisamment hautes, dans le sens parallèle à celui du déplacement des flasques mobiles entre leurs positions de repos et leurs positions de service, pour permettre un tel déplacement.

Le débattement ainsi permis du crevé de guidage 99 dans la fenêtre 100 n'est possible que dans une seule direction, ce qui détermine la fonction de guidage lors du déplacement des flasques mobiles 138, 140.

Les flasques mobiles 138, 140 sont également munis chacun d'une fenêtre 101 coopérant avec le crevé de guidage 99 en saillie axiale de l'autre flasque mobile, à travers la fenêtre 100 correspondante. Les fenêtres 101, comme le montre particulièrement la figure 13, sont de hauteur supérieure à celle des fenêtres 100, et permettent le débattement relatif des flasques mobiles 138, 140 selon une seule direction, contribuant ainsi également, par coopération respective avec le crevé de guidage 99, à la fonction de guidage.

La substitution de tels moyens de guidage à ceux prévus dans les modes de réalisation précédemment décrits, et c'est là un avantage considérable du présent mode de réalisation, permet de préserver une surface pleine à proximité des pattes d'appui 42 plus importante que dans les modes de réalisation précédents, dans lesquels ces zones étaient largement découpées.

Ceci a une incidence sur la fiabilité des flasques, et par là-même, sur celle de l'organe d'interposition.

En effet, les pattes d'appui ont pour rôle de transmettre un couple relatif entre différents éléments en rotation.

La partie des flasques constituant cette patte d'appui 42, ainsi que les zones immédiatement à proximité, sont de résistance critique.

Tout affaiblissement de ces zones est donc, pour cette raison, indésirable.

Or, toute découpe constitue un affaiblissement, et doit, par conséquent, être limitée au strict nécessaire, ce qui est obtenu par le présent mode de réalisation.

On notera que, dans tous les cas, les flasques 138, 139, 140 constituent avantageusement, avec le voile de moyeu 12 et le contre-voile 46, un sous-ensemble susceptible d'être pré-assemblé unitairement avant son montage dans l'ensemble.

Bien entendu, la présente invention ne se limite pas aux formes de réalisation décrites et représentées, mais englobe toute variante d'exécution et/ou de combinaison de leurs divers éléments.

Il est notamment possible, selon une variante d'exécution, de maintenir le flasque intermédiaire 139 en position radialement fixe par le simple engagement sans jeu de l'ouverture 45, diamétralement réduite à cet effet, sur le moyeu.

Le domaine d'application de la présente invention ne se limite pas non plus à celui des seules frictions d'embrayage, mais s'étend par exemple aussi bien à celui des dispositifs amortisseurs de torsion, qui, dépourvus de tout disque de friction, sont mis en oeuvre, en tant que filtres pour les vibrations, au sein des transmissions à variation continue.

## Revendications

1. Dispositif amortisseur de torsion, notamment pour véhicule automobile, du genre comportant au moins trois parties coaxiales deux à deux montées rotatives l'une par rapport à l'autre dans les limites d'un débattement angulaire déterminé et à l'encontre de moyens élastiques, dits moyens élastiques à action circonférentielle, aptes à agir circonférentiellment entre elles pour une plage au moins d'un tel débattement angulaire, à savoir, d'une part, un moyeu (10), au moins un voile (12), communément dit voile de moyeu, qui forme transversalement une pièce annulaire autour du moyeu (10), avec, entre lui et ledit moyeu (10), des moyens d'engrènement à jeu (13), et au moins une rondelle (23), communément dite rondelle de guidage, qui, comme ledit voile de moyeu (12), et parallèlement à celui-ci, forme transversalement une pièce annulaire autour du moyeu (10), mais sans relation avec celui-ci, et, d'autre part, un organe d'interposition (37), qui, sensiblement à la force centrifuge, est monté mobile entre une position d'attente, pour laquelle il est inactif, et, au-delà d'une vitesse de rotation déterminée, ou vitesse critique, une position de service, pour laquelle, intervenant entre deux desdites parties rotatives, pour un sens de rotation relatif au moins de celles-ci, il sollicite, dans ledit sens de rotation, une portion au moins des moyens élastiques à action circonférentielle autres que ceux agissant normalement entre elles, et des moyens de rappel aptes à solliciter en direction de sa dite position d'attente ledit organe d'interposition (37), <u>caractérise en ce que,</u> prévu pour intervenir entre le voile de moyeu (12) et le moyeu (10), ledit organe d'interposition (37) comporte au moins un flasque (38), qui, monté mobile radialement, en étant guidé pour ce faire par le voile de moyeu (12), comporte une denture (39) par laquelle il est adapté à venir en prise, en position de service, avec une denture complémentaire (40) prévue à cet effet sur le moyeu (10), et qui comporte globalement au moins une patte (42), ou patte d'appui, par laquelle il est apte à agir alors sur une portion au moins des moyens élastiques à action circonférentielle établis entre ledit voile de moyeu (12) et une rondelle de guidage (23).

2. Dispositif amortisseur de torsion suivant la revendication 1, caractérisé en ce que ledit flasque (38) est engagé par des boutonnières (43) sur des colonnettes de guidage (44) portés axialement en saillie par le voile de moyeu (12).

3. Dispositif amortisseur de torsion suivant la revendication 2, caractérisé en ce que chacune des boutonnières (43) que comporte ledit flasque (38) comporte deux tronçons à savoir un tronçon courbe (48), qui, globalement allongé circulairement, est centré sur l'axe de l'ensemble, et un tronçon droit (49), qui, disposé à l'une des extrémités circonférentielles du précédent, s'étend sensiblement parallèlement au plan diamétral de l'ensemble passant par la zone médiane dudit flasque (38).

4. Dispositif amortisseur de torsion suivant la revendication 3, caractérisé en ce que les deux tronçons (48, 49) d'une boutonnière (43) dudit flasque (38) se raccordent l'un à l'autre par des congés de raccordement largement arrondis.

5. Dispositif amortisseur de torsion suivant l'une quelconque des revendications 3, 4, caractérisé en ce que, pour l'ensemble des boutonnières (43) dudit flasque (38) le tronçon courbe (48) s'étend circonférentiellement d'un même côté du tronçon droit (49) qui lui est associé.

6. Dispositif amortisseur de torsion suivant l'une quelconque des revendications 2 à 5, caractérisé en ce que, parallèlement au voile de moyeu (12) s'étend un contre-voile (46) qui est solidarisé en rotation audit voile de moyeu par les colonnettes de guidage portées par celui-ci, et ledit flasque s'étend entre ledit voile de moyeu et ledit contre-voile.

7. Dispositif amortisseur de torsion suivant l'une quelconque des revendications 1 à 6, caractérisé en ce que les dents des dentures complémentaires (39, 40) prévues sur ledit flasque (38) et le moyeu (10) ont des flancs légèrement obliques sur un rayon de l'ensemble passant par leur zone médiane et des bords arrondis.

8. Dispositif amortisseur de torsion suivant l'une quelconque des revendications 1 à 7, caractérisé en ce que la denture (39) prévue sur ledit flasque (38) résulte d'une découpe de la tranche d'une ouverture (45) par laquelle ledit flasque (38) est engagé sur le moyeu (10).

9. Dispositif amortisseur de torsion suivant l'une quelconque des revendications 1 à 8, caractérisé en ce que, les moyens élastiques à action circonférentielle établis entre le voile de moyeu (12) et une rondelle de guidage (23) comportant des organes élastiques (33A, 33B) allongés sensiblement tangentiellement à une circonférence de l'ensemble en étant logés pour partie dans des évidements (34A, 34B) dudit voile de moyeu (12) et pour partie dans des évidements (35A, 35B) de ladite rondelle de guidage (23), ledit flasque (38) comporte lui-même au moins un évidement (55, 55') par lequel il est engagé sur un desdits organes élastiques (33A), l'un des bords dudit évidement (55, 55') constituant les extrémités circonférentielles de celui-ci formant ladite patte d'appui (42) d'un tel flasque (38).

10. Dispositif amortisseur de torsion suivant la revendications 9, caractérisé en ce que, pour la configuration de repos de l'ensemble, l'autre desdits bords de l'évidement (55, 55') dudit flasque (38) est à distance de l'organe élastique (33A).

11. Dispositif amortisseur de torsion suivant l'une quelconque des revendications 9, 10, caractérisé en ce que ledit flasque (38) s'étend de part et d'autre de l'axe de l'ensemble, et il présente, disposés chacun respectivement de part et l'autre dudit axe, deux évidements (55, 55') par lesquels il est engagé sur deux organes élastiques (33A).

12. Dispositif amortisseur de torsion suivant l'une quelconque des revendications 1 à 11, caractérisé en ce que ledit flasque (38) porte une masselotte (58).

13. Dispositif amortisseur de torsion suivant la revendication 12, caractérisé en ce que ladite masselotte (58) s'étend le long d'un bord circonférentiel dudit flasque (38) disposé de l'autre côté de l'axe de l'ensemble par rapport à sa denture (39).

14. Dispositif amortisseur de torsion suivant l'une quelconque des revendications 12, 13, caractérisé en ce que ladite masselotte (58) est formée par un repli sur lui-même dudit flasque (38).

15. Dispositif amortisseur de torsion suivant l'une quelconque des revendications 1 à 14, caractérisé en ce que, deux rondelles de guidage (23) étant prévues parallèlement l'une à l'autre en étant solidarisées l'une à l'autre par des colonnettes (24) qui s'étendent axialement, ledit flasque (38) présente latéralement au moins une échancrure (80, 80'), qui s'étend circonférentiellement et par laquelle il est engagé sur une telle colonnette (24).

16. Dispositif amortisseur de torsion suivant la revendication 15, caractérisé en ce que ledit flasque (38) présente deux échancrures (80, 80'), disposées chacune respectivement sur ses deux bords latéraux.

17. Dispositif amortisseur de torsion suivant l'une quelconque des revendications 15, 16, caractérisé en ce que l'un des flancs au moins d'une au moins desdites échancrures (80, 80') est globalement oblique sur la tangente à la circonférence de l'ensemble passant par sa zone médiane.

18. Dispositif amortisseur de torsion suivant les revendications 12 et 15, prises conjointement, caractérisé en ce que l'un des flancs de l'échancrure (80, 80') dudit flasque (38) est formé par un prolongement circonférentiel de sa masselotte (58).

19. Dispositif amortisseur de torsion suivant l'une quelconque des revendications 1 à 18, caractértisé en ce que l'organe d'interposition (37) comporte deux flasques (38) disposés diamétralement tête-bêche l'un par rapport à l'autre.

20. Dispositif amortisseur de torsion suivant la revendication 19, caractérisé en ce que lesdits flasques (38) sont axialement l'un au contact de l'autre.

21. Dispositif amortisseur de torsion suivant l'une quelconque des revendications 19, 20, caractérisé en ce que chacun desdits flasques (38) présente le long d'un de ses bords au moins un retour en équerre (62) par lequel il est axialement engagé sur la tranche du bord opposé de l'autre.

22. Dispositif amortisseur de torsion suivant les revendications 6 et 19, prises conjointement, caractérisé en ce que lesdits flasques (38) sont soumis à des moyens élastiques (74), qui les sollicitent axialement l'un vers l'autre.

23. Dispositif amortisseur de torsion, notamment pour véhicule automobile, du genre comportant trois parties coaxiales deux à deux montées rotatives, selon l'une quelconque des revendications 1 à 19 et 22, caractérisé en ce qu'entre lesdits flasques mobiles (138, 140) est interposé un flasque (139) dit intermédiaire, radialement fixe.

24. Dispositif amortisseur de torsion suivant la revendication 23, caractérisé en ce que chacun desdits flasques mobiles (138, 140) est relié au flasque intermédiaire (139) par des moyens élastiques (65).

25. Dispositif suivant la revendication 24, caractérisé en ce que lesdits moyens élastiques (65) sont au nombre de deux, disposés de part et d'autre du moyeu, un moyen élastique reliant l'un des flasques mobiles au flasque intermédiaire, et l'autre moyen élastique reliant l'autre flasque mobile au flasque intermédiaire.

26. Dispositif amortisseur de torsion suivant l'une quelconque des revendications précédentes, caractérisé en ce que lesdits moyens élastiques (65) sont des ressorts disposés de façon sensiblement parallèle aux flasques.

27. Dispositif selon l'une quelconque des revendications précédentes, caractérisé en ce que les flasques mobiles (138, 140) sont en contact de glissement avec ledit flasque intermédiaire (139), de part et d'autre de celui-ci, les trois flasques étant superposés.

28. Dispositif selon l'une quelconque des revendications précédéntes, caractérisé en ce que des moyens de guidage découpés dans la surface des flasques sont prévus pour le guidage du déplacement radial des flasques mobiles, moyens empêchant tout débattement angulaire entre les flasques mobiles (138, 140) et le flasque intermédiaire (139).

29. Dispositif selon la revendication 28, caractérisé en ce que lesdits moyens de guidage sont constitués de crevés dits de guidage (99) découpés sur trois côtés et repliés axialement en saillie en direction du flasque d'interposition (139) dans les flasques mobiles (138, 140), lesdits crevés de guidage pouvant coulisser dans des fenêtres (100, 101) ménagées dans les deux autres flasques de manière à permettre un déplacement sur une seule direction parallèle au sens de déplacement radial des flasques des crevés (99) dans les fenêtres (100, 101), et à empêcher tout déplacement relatif selon une autre direction.

30. Dispositif selon l'une quelconque des revendications précédéntes, caractérisé en ce que lesdites fenêtres (100, 101) s'étendent radialement sur une longueur telle qu'elles permettent un déplacement des crevés de guidage suffisant pour qu'un déplacement radial relatif des flasques (138, 140) permette l'engagement total des dentures (39) des flasques radialement mobiles avec la denture du moyeu (40).

**Patentansprüche**

1. Torsionsschwingungsdämpfer, insbesondere für Kraftfahrzeuge, der Bauart, bei der zumindest drei koaxiale, paarweise gegeneinander in den Grenzen eines vorbestimmten Winkel-Federwegs gegen elastische Mittel, als in Umfangsrichtung wirkende Federmittel bezeichnet, verdrehbare Teile vorgesehen sind, welche Federmittel zwischen ihnen zumindest über eine Abschnitt dieses Winkel-Federwegs in Umfangsrichtung wirken, mit zum einen einer Nabe (10), zumindest einer Scheibe (12), als Nabenscheibe bezeichnet, die in Querrichtung ein ringförmiges Teil um die Habe bildet, mit zwischen diesem und der Habe vorgesehenen, Spiel behafteten Verzahnungsmitteln (13) und mindestens einem Ring (23), als Führungsring bezeichnet, der, wie die Habenscheibe und parallel zu dieser ein um die Nabe (10) ringförmiges Teil bildet, jedoch keine Beziehung zu dieser aufweist, und zum anderen ein Zwischenorgan (37), das, empfindlich gegen die Zentrifugalkraft, zwischen einer Wartestellung, in der es inaktiv ist und, jenseits einer vorbestimmten oder kritischen Rotationsgeschwindigkeit, einer Betriebsposition bewegbar angeordnet ist, in welcher Betriebsposition es, in dem es zwischen zweien der genannten Teile zumindest in einer relativen Drehrichtung der Teile eingreift und zumindest einen Teil der in Umfangsrichtung wirkenden Federmittel in Richtung der genannten Drehrichtung belastet, außer jenen, die normalerweise zwischen ihnen wirken, und mit Rückstellmitteln, die ausgebildet sind, das Zwischenorgan (37) in Richtung seiner Ruhestellung zu belasten, dadurch gekennzeichnet, daß das Zwischenorgan (37) zum Einwirken zwischen der Nabenscheibe (12) und der Nabe (10) mindestens einen Flansch (38) aufweist, der radial beweglich angeordnet und zu diesem Zweck, von der Nabenscheibe (12) geführt, eine Zahnung (39) besitzt, mit der es in der Betriebsstellung in Eingriff mit einer komplementären Zahnung treten kann, die zu diesem Zweck an der Nabe (10) ausgebildet ist, und das im wesentlichen eine Lasche (42) oder Anschlaglasche aufweist, mittels der es in der Lage ist, auf zumindest einen Teil der in Umfangsrichtung wirkenden, zwischen der Nabenscheibe (12) und einem Führungsring (23) eingesetzten Federmittel einzuwirken.

2. Torsionsschwingungsdämpfer nach Anspruch 1, dadurch gekennzeichnet, daß der Flansch (38) mittels Langlöcher (43) auf axial an der Nabenscheibe (12) vorstehenden Führungsstifte (44) aufgesetzt ist.

3. Torsionsschwingungsdämpfer nach Anspruch 2, dadurch gekennzeichnet, daß jedes der Langlöcher (43), die den Flansch (38) tragen, zwei Abschnitte aufweist, nämlich einen gekrümmten Abschnitt (48), der, im wesentlichen in Umfangsrichtung verlängert, zur Achse der Anordnung zentriert ist, und einen geraden Abschnitt (49), der, an einem Umfangsende des vorgenannten Abschnitts angeordnet, sich im wesentlichen parallel zu der Diametralebene der Anordnung, die durch die Mittelzone des Flanschs (38) führt, erstreckt.

4. Torsionsschwingungsdämpfer nach Anspruch 3, dadurch gekennzeichnet, daß die beiden Abschnitte (48, 49) eines Langlochs (43) des Flansches (38) miteinander durch weit ausgerundete Hohlkehlen verbunden sind.

5. Torsionsschwingungsdämpfer nach einem der Ansprüche 3 oder 4, dadurch gekennzeichnet, daß für die Gesamtheit der Langlöcher (43) des Flansches (38) sich der gekrümmte Abschnitt (48) in Umfangsrichtung auf einer selben Seite des ihm zugeordneten geraden Abschnitts (49) erstreckt.

6. Torsionsschwingungsdämpfer nach mindestens einem der Ansprüche 2 bis 5, dadurch gekennzeichnet, daß sich parallel zur Nabenscheibe (12) eine Gegenscheibe (46) erstreckt, die durch von der Nabenscheibe getragene Führungsstifte drehfest mit dieser verbunden sind, und daß sich der genannte Flansch zwischen der Nabenscheibe und der Gegenscheibe erstreckt.

7. Torsionsschwingungsdämpfer nach mindestens einem der Ansprüche 1 bis 6, dadurch gekennzeichnet, daß die Zähne der komplementären Zahnungen (39, 40), die an den genannten Flanschen (38) und der Nabe (10) vorgesehen sind, auf einem Radius der Anordnung, der durch ihre Mittenzonen hindurchführt, leicht abgeschrägte Flanken und abgerundete Ränder aufweist.

8. Torsionsschwingungsdämpfer nach mindestens einem der Ansprüche 1 bis 7, dadurch gekennzeichnet, daß die auf dem genannten Flansch (38) vorgesehene Zahnung (39) von einem Ausschnitt aus dem Rand einer Öffnung (33) gebildet wird, mittels der der genannte Flansch (38) auf der Nabe (10) aufgesetzt ist.

9. Torsionsschwingungsdämpfer nach mindestens einem der Ansprüche 1 bis 8, dadurch gekennzeichnet, daß die in Umfangsrichtung wirkenden Federmittel, die zwischen der Nabe (12) und einem Führungsring (38) eingesetzt sind, sich im wesentlichen tangential an einen Umkreis der Anordnung erstreckende elastische Organe (33A, 33B) aufweist, die zum Teil in Ausnehmungen (34A, 34B) der Nabenscheibe (12) und zum Teil in Ausnehmungen (35A, 35B) in dem Führungsring (23) eingesetzt sind, wobei der Flansch (38) selber zumindest eine Ausnehmung (55, 55') besitzt, mittels welcher er auf eines der genannten elastischen Organe 33A aufgesetzt ist und einer der Ränder der genannten Ausnehmung (55, 55') , welche deren Umfangsränder bilden, die genannten Anschlaglasche (42) eines solchen Flansches (38) ausformt.

10. Torsionsschwingungsdämpfer nach Anspruch 9, dadurch gekennzeichnet, daß für die Ruhestellung der Anordnung der andere der genannten Ränder der Ausnehmung (55, 55') des genannten Flansches (38) einen Abstand zu dem elastischen Organ (33A) aufweist.

11. Torsionsschwingungsdämpfer nach Anspruch 9 oder 10, dadurch gekennzeichnet, daß der genannten Flansch (38) sich zu beiden Seiten der Achse der Anordnung erstreckt und zwei Ausnehmungen (55, 55') aufweist, die jeweils zu beiden Seiten der genannten Achse angeordnet sind und mittels welchen er auf zwei elastische Organe (33A) aufgesetzt ist.

12. Torsionsschwingungsdämpfer nach mindestens einem der Ansprüche 1 bis 11, dadurch gekennzeichnet, daß der genannten Flansch (38) ein Fliehgewicht (58) trägt.

13. Torsionsschwingungsdämpfer nach Anspruch 12, dadurch gekennzeichnet, daß das Fliehgewicht (58) sich entlang eines Umfangsrands des genannten Flansches (38) erstreckt, der bezüglich seiner Zahnung (39) auf der anderen Seite der Achse angeordnet ist.

14. Torsionsschwingungsdämpfer nach Anspruch 12 oder 13, dadurch gekennzeichnet, daß das Fliehgewicht (58) von einer an dem genannten Flansch (38) ausgeformten Umbiegung gebildet ist.

15. Torsionsschwingungsdämpfer nach mindestens einem der Ansprüche 1 bis 14, dadurch gekennzeichnet, daß zwei Führungsringe (23) parallel zueinander vorgesehen und durch sich axial erstreckende Stifte miteinander verbunden sind, und wobei der Flansch (38) seitlich zumindest einen Ausschnitt (80, 80') aufweist, der sich in Umfangsrichtung erstreckt, und mittels welchem er auf einem solchen Stift (24) aufgesetzt ist.

16. Torsionsschwingungsdämpfer nach Anspruch 15, dadurch gekennzeichnet, daß der genannte Flansch (38) zwei Ausschnitte (80, 80') aufweist, die jeweils auf seinen beiden seitlichen Rändern angeordnet sind.

17. Torsionsschwingungsdämpfer nach Anspruch 15 oder 16, dadurch gekennzeichnet, daß zumindest eine der Flanken von zumindest einer der Ausschnitte (80, 80') im wesentlichen schräg zur Tangente an den Umkreis der Anordnung, der durch seine Mittelzone führt, verläuft.

18. Torsionsschwingungsdämpfer nach Anspruch 12 und 15 gemeinsam, dadurch gekennzeichnet, daß eine der Flanken des Ausschnitts (80, 80') des genannten Flansches (38) von einer Umfangsverlängerung seines Fliehgewichts (58) gebildet ist.

19. Torsionsschwingungsdämpfer nach mindestens einem der Ansprüche 1 bis 18, dadurch gekennzeichnet, daß das Zwischenorgan (37) zwei Flansche (38) aufweist, die einander diametral entgegengesetzt angeordnet sind.

20. Torsionsschwingungsdämpfer nach Anspruch 19, dadurch gekennzeichnet, daß die genannten Flansche (38) in axialer Richtung miteinander in Kontakt stehen.

21. Torsionsschwingungsdämpfer nach Anspruch 19 oder 20, dadurch gekennzeichnet, daß jeder Flansch (38) entlang einem seiner Ränder zumindest eine Abwinklung (62) besitzt, mittels welcher er in axialer Richtung auf der Kante des gegenüberliegenden Rands des anderen aufgesetzt ist.

22. Torsionsschwingungsdämpfer nach den Ansprüche 6 und 9 gemeinsam, dadurch gekennzeichnet, daß die genannten Flansche (38) Federmitteln (74) ausgesetzt sind, die sie axial gegeneinander drücken.

23. Torsionsschwingungsdämpfer, insbesondere für Kraft fahrzeuge, der Bauart mit drei koaxialen, paarweise verdrehbaren Teilen, nach mindestens einem der Ansprüche 1 bis 19 und 22, dadurch gekennzeichnet, daß zwischen den genannten bewegbaren Flanschen (138, 140), ein Flansch (139) als Zwischenflansch bezeichnet, in radialer Richtung unbeweglich eingesetzt ist.

24. Torsionsschwingungsdämpfer nach Anspruch 23, dadurch gekennzeichnet, daß jeder der genannten bewegbaren Flansche (138, 140) am Zwischenflansch (139) mittels elastischer Mittel (65) befestigt ist.

25. Torsionsschwingungsdämpfer nach Anspruch 24, dadurch gekennzeichnet, daß zwei solcher elastischer Mittel (65) zu beiden Seiten der Nabe angeordnet sind, wobei ein elastisches Mittel den einen der bewegbaren Flansche mit dem Zwischenflansch und das andere elastische Mittel den anderen bewegbaren Flansch mit dem Zwischenflansch verbindet.

26. Torsionsschwingungsdämpfer nach mindestens einem der vorangegangenen Ansprüche, dadurch gekennzeichnet, daß die elastischen Mittel (65) im wesentlichen parallel zu den Flanschen angeordnete Federn sind.

27. Torsionsschwingungsdämpfer nach mindestens einem der vorangegangenen Ansprüche dadurch gekennzeichnet, daß die bewegbaren Flansche (138, 140) zu beiden Seiten des genannten Zwischenflansches (139) mit diesem in gleitendem Kontakt stehen, wobei die drei Flansche aufeinander gelegt sind.

28. Torsionsschwingungsdämpfer nach mindestens einem der vorhergehenden Ansprüche, dadurch gekennzeichnet, daß Führungsmittel, die in der Oberfläche der Flansche eingeschnitten sind, zur Führung der radialen Verschiebung der bewegbaren Flansche vorgesehen sind und jeglichen Winkelausschlag zwischen den bewegbaren Flanschen (138, 140) und dem Zwischenflansch (139) verhindern.

29. Torsionsschwingungsdämpfer nach Anspruch 28, dadurch gekennzeichnet, daß die Führungsmittel von in den bewegbaren Flanschen (138, 140) an drei Seiten eingeschnittenen und axial in Richtung auf den Zwischenflansch (139) vorspringenden Führungausprägungen gebildet werden, welche Führungausprägungen kulissenartig in Fenstern (100, 101) gleiten kann, die in den zwei anderen Flanschen ausgebildet sind, der Art, daß eine Verschiebung in eine einzige Richtung parallel im Sinne einer radialen Verschiebung der Flansche der Führungsausprägungen (99) in den Fenstern (100, 101) möglich ist, und um jegliche Relativverschiebung in eine andere Richtung zu verhindern.

30. Torsionsschwingungsdämpfer nach mindestens einem der vorangegangen Ansprüche, dadurch gekennzeichnet, daß die Fenster (100, 101) sich radial über eine genügende Länge erstrecken, damit sie eine Verschiebung der Führungsausprägungen ermöglichen, die ausreichend ist, damit eine radiale Relativverschiebung der Flansche (138, 140) den vollständigen Eingriff der Zahnung (39) der radial bewegbaren Flansche mit der Zahnung (40) der Nabe gestattet.

## Claims

1. Torsional damper device, especially for an automobile vehicle, of the kind comprising at least three coaxial parts in pairs mounted to rotate relative to one another within defined limits of angular movement against elastic means, termed elastic means with circumferential action, arranged to act circumferentially between them over at least part of such relative angular movement, that is to say, on the one hand, a hub (10), at least one flange (12), commonly called a hub flange, which transversely forms an annular piece around the hub (10), with meshing means (13) with a clearance between it and the said hub (10), and at least one washer (23), commonly called a guide ring, which, like the said hub flange (12) and parallel to it, transversely forms an annular piece around the hub (10), but is not connected to it, and, on the other hand, an intermediate member (37), which, responsive to centrifugal force, is mounted to move between a standby position, in which it is inoperative, and when the rotation speed exceeds a set value, or critical speed, an operative position in which intervening between the two said rotating parts, in at least one direction of relative rotation of these, it drives in the said direction of rotation at least part of the elastic means with circumferential action, other than those normally operating between them, and return means arranged to drive the said intermediate member (37) in the direction of its said standby position, characterized in that the said intermediate member (37) comprises, to intervene between the hub flange (12) and the hub (10), at least one flange (38) which, mounted to be movable radially, and guided when doing so by the hub flange (12), comprises a toothed portion (39) through which, in its operative position, it is arranged to cooperate with a complementary toothed portion (40) provided for this purpose on the hub (10) and which comprises at least one lug (42), or bearing lug, through which it can act on at least a part of the elastic means with circumferential action established between the said hub flange (12) and a guide ring (23).

2. Torsional damper device according to Claim 1, characterized in that the said flange (38) is engaged by slots (43) on guide pegs (44) carried projecting axially by the hub flange (12).

3. Torsional damper device according to Claim 2, characterized in that each of the slots (43) of the said flange (38) comprises two sections, namely a curved section (48) which, extending generally circularly, is centered on the axis of the assembly, and a straight section (49) which, situated at one of the circumferential ends of the previously mentioned section, extends substantially parallel to the diametral plane of the assembly passing through the median region of the said flange (38).

4. Torsional damper device according to Claim 3, characterized in that the two sections (48, 49) of a slot (43) of the said flange (38) meet one another through well rounded curved portions.

5. Torsional damper device according to any one of Claims 3 or 4, characterized in that the curved section (48) of each slot (43) in the said flange (38) extends circumferentially from the same end of the straight section (49) associated with it.

6. Torsional damper device according to any one of Claims 2 to 5, characterized in that a counter-flange (46) extends parallel to the hub flange (12) which is fixed in rotation with the said hub flange by the guide pegs carried by the latter, and the said flange extends between the said hub flange and the said counter-flange.

7. Torsional damper device according to any one of Claims 1 to 6, characterized in that the teeth of the complementary toothed portions (39, 40) provided on the said flange (38) and the hub (10) have flanks slightly oblique to a radius of the assembly passing through their middle region and have rounded edges.

8. Torsional damper device according to any one of Claims 1 to 7, characterized in that the toothed portion (39) provided on the said flange (38) is formed by cutting the edge of an opening (45) by means of which the said flange (38) is engaged on the hub (10).

9. Torsional damper device according to any one of Claims 1 to 8, characterized in that the elastic means with circumferential action situated between the hub flange (12) and a guide ring (23), comprise elastic members (33A, 33B) extending substantially tangentially to a circumference of the assembly, and are partially housed in openings (34A, 34B) in the said hub flange (12) and partially in openings (35A, 35B) in the said guide ring (23), the said flange (38) itself comprises at least one opening (55, 55') by which it is engaged on one of the said elastic members (33A), one edge of the said opening (55, 55') constituting the circumferential end of this which forms the bearing lug (42) of such a flange (38).

10. Torsional damper device according to Claim 9, characterized in that in the inoperative position of the assembly, the other of the said edges of the opening (55, 55') of the said flange (38) is spaced from the elastic member (33A).

11. Torsional damper device according to any one of Claims 9 or 10, characterized in that the said flange (38) extends on both sides of the axis of the assembly and presents, one on each side respectively of the said axis, two openings (55, 55') by means of which it is engaged on two elastic members (33A).

12. Torsional damper device according to any one of Claims 1 to 11, characterized in that the said flange (38) carries a flyweight (58).

13. Torsional damper device according to Claim 12, characterized in that the said flyweight (58) extends along a circumferential edge of the said flange (38) on the opposite side of the axis of the assembly relative to its toothed portion (39).

14. Torsional damper device according to any one of Claims 12 or 13, characterized in that the said flyweight (58) is formed by a fold of the said flange (38) itself.

15. Torsional damper device according to any one of Claims 1 to 14, characterized in that, two guide rings (23) are provided parallel to one another which are fixed to one another by pegs (24) which extend axially, and the said flange (38) presents laterally at least one notch (80, 80') which extends circumferentially and by means of which it is engaged on such a peg (24).

16. Torsional damper device according to Claim 15, characterized in that the said flange (38) presents two notches (80, 80') disposed respectively on each of its two lateral edges.

17. Torsional damper device according to any one of Claims 15 or 16, characterized in that one of the flanks at least of at least one of the said notches (80, 80') is generally oblique to a tangent to the circumference of the assembly passing through its middle region.

18. Torsional damper device according to Claims 12 and 15, taken together, characterized in that one of the flanks of the notch (80, 80') of the said flange (38) is formed by a circumferential prolongation of its flyweight (58).

19. Torsional damper device according to any one of Claims 1 to 18, characterized in that the intermediate member (37) comprises two flanges (38) disposed diametrically head to tail relative to one another.

20. Torsional damper device according to Claim 19, characterized in that the said flanges (38) are axially in contact with one another.

21. Torsional damper device according to any one of Claims 19 or 20, characterized in that each of the said flanges (38) has along one of its edges at least one right-angled lip (62) by which it is axially engaged on the edge of the opposite rim of the other flange.

22. Torsional damper device according to Claims 6 and 19, taken together, characterized in that the said flanges (38) are subjected to elastic means (74) which drive them axially towards one another.

23. Torsional damper device, especially for an automobile, of the kind comprising three coaxial parts in pairs mounted to rotate relative to one another, according to any one of Claims 1 to 19 and 22, characterized in that between the said movable flanges (138, 140) a radially fixed flange (139), termed intermediate, is interposed.

24. Torsional damper device according to Claim 23, characterized in that each of the said movable flanges (138, 140) is joined to the intermediate flange (139) by elastic means (65).

25. Torsional damper device according to Claim 23, characterized in that the said elastic means (65) are two in number, disposed on either side of the hub, one elastic means joining one of the movable flanges to the intermediate flange, and the other elastic means joining he other movable flange to the intermediate flange.

26. Torsional damper device according to any one of the preceding Claims, characterized in that the said elastic means (65) are springs disposed substantially parallel to the flanges.

27. Torsional damper device according to any one of the preceding Claims, characterized in that the movable flanges (138, 140) are in sliding contact with the said intermediate flange (139) on both sides of it, the three flanges being superposed.

28. Torsional damper device according to any one of the preceding Claims, characterized in that guide means are cut into the surface of the flange to guide the radial displacement of the movable flanges, these means preventing any angular movement between the movable flanges (138, 140) and the intermediate flange (139).

29. Torsional damper device according to Claim 23, characterized in that the said guide means consist of tabs, termed guide tabs (99), cut on three sides from the movable flanges (138, 140) and bent to project axially towards the intermediate flange (139), the said guide tabs being able to slide in openings (100, 101) formed in the two other flanges so as to permit a displacement of the tabs (99) in the openings (100, 101) in only one direction parallel to the direction of radial displacement of the flanges, and to prevent any relative displacement in any other direction.

30. Torsional damper device according to any one of the preceding Claims, characterized in that the said openings (100, 101) extend radially far enough to permit sufficient displacement of the guide tabs for relative radial displacement of the flanges (138, 140) to allow total engagement of the toothed portions (39) of the radially movable flanges with the toothed portion of the hub (40).

FIG.1

# FIG. 2

# FIG. 4

# FIG. 3

# F I G. 5A

# FIG.5B

# FIG.5C

0 165 874

## FIG. 6A

$F_1$

## FIG. 6B

## FIG. 6C

## FIG. 6D

11

## FIG.6E

F1 →

## FIG.6F

## FIG.6G

## FIG.6H

FIG.7

FIG.9

FIG.8

FIG.10

FIG.12

FIG.13

# FIG.11